(19) **Europäisches Patentamt**
**European Patent Office**
**Office européen des brevets**

(11) **EP 3 042 765 B1**

(12) **EUROPEAN PATENT SPECIFICATION**

(45) Date of publication and mention
of the grant of the patent:
**18.03.2020 Bulletin 2020/12**

(21) Application number: **14843040.8**

(22) Date of filing: **04.09.2014**

(51) Int Cl.:
**B32B 27/00** (2006.01)    **B32B 7/06** (2019.01)
**G09F 3/04** (2006.01)    **B32B 7/00** (2019.01)
**B32B 7/02** (2019.01)    **B32B 7/04** (2019.01)
**B32B 27/06** (2006.01)    **B32B 27/16** (2006.01)
**B32B 27/08** (2006.01)    **B32B 27/32** (2006.01)
**B32B 27/34** (2006.01)    **B32B 27/36** (2006.01)
**G09F 7/12** (2006.01)

(86) International application number:
**PCT/JP2014/073388**

(87) International publication number:
**WO 2015/034019 (12.03.2015 Gazette 2015/10)**

(54) **ELECTROSTATIC ADSORBABLE SHEET AND DISPLAY OBJECT USING THE SAME**

ELEKTROSTATISCH FIXIERBARE FOLIEN UND ANZEIGEOBJEKT DAMIT

FEUILLES FIXABLES ÉLECTROSTATIQUEMENT ET OBJET D'AFFICHAGE LES INCLUANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.09.2013 JP 2013182856**

(43) Date of publication of application:
**13.07.2016 Bulletin 2016/28**

(73) Proprietor: **Yupo Corporation
Tokyo 101-0062 (JP)**

(72) Inventors:
• **KOIKE, Hiroshi
Kamisu-shi
Ibaraki 314-0102 (JP)**

• **YAHAGI, Yuichi
Kamisu-shi
Ibaraki 314-0102 (JP)**

(74) Representative: **Zimmermann & Partner
Patentanwälte mbB
Josephspitalstr. 15
80331 München (DE)**

(56) References cited:
**EP-A1- 2 289 695**    **WO-A1-92/00361**
**WO-A1-2009/154177**    **WO-A1-2013/191289**
**JP-A- 2012 145 936**    **JP-A- 2012 145 936**
**JP-U- H01 152 371**    **US-A1- 2011 155 311**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an electrostatic adsorbable sheet with which non-adhesive printed matter such as a sign, a poster, or an advertisement can be easily attached to an adherend without using a pressure-sensitive adhesive or an adhesive agent, by means of electrostatic adsorption.

Background Art

Conventionally, in order to produce a display sheet product having good peelability, a special sheet prepared by applying a pressure-sensitive adhesive having good peelability to one surface of a display sheet in advance is used, and a product in which characters or designs to be displayed are printed on the other surface of the sheet is used. Such a special sheet is susceptible to the protrusion of the pressure-sensitive adhesive from the edges, which tends to lead to troubles such as the adhesion of the pressure-sensitive adhesive to the device or other display sheets in a printing step or a cutting step of a subsequent stage, and this diminishes operational efficiency. In addition, since the pressure-sensitive adhesive is provided on the display sheet in advance, there are drawbacks such as the inability to print on the adhesive surface side of the display sheet.

As a technique for solving such problems, Patent Documents 1 and 2 disclose a method of displaying non-adhesive printed matter that has undergone printing using a double-sided adhesive sheet having good peelability.

Although this technique has the merit that printing or the like can also be displayed on the adhesive surface, there are drawbacks in that when attached to an adherend such as a glass sheet, air partially remains between the adherend and the pressure-sensitive adhesive, which diminishes the appearance of the printed matter attached to the adherend.

Documents JP 2012 145936 A and EP 2 289 695 A1 describe electrostatic adsorbable sheets having a high electrostatic attraction force, wherein a sheet layer is electrostatically adsorbable to an object to be attached.

Citation List

Patent Literature

Patent Document 1: Japanese Unexamined Patent Application Publication No. 2000-297260A
Patent Document 2: Japanese Unexamined Patent Application Publication No. 2001-220560A

Summary of Invention

Technical Problem

In light of the drawbacks of the prior art described above, an object of the present invention is to provide an adhesive sheet with which non-adhesive printed matter such as a sign, a poster, or an advertisement can be attached to an adherend as a display object without using a pressure-sensitive adhesive or the like, wherein air remaining is unlikely to occur when the sheet is attached to the adherend.

Solution to Problem

As a result of conducting dedicated research in order to solve the problem described above, the present inventors discovered that a double-sided adhesive sheet having prescribed characteristics can be provided using an electrostatic adsorbable sheet comprising a laminate having a specific structure produced via a specific process, and the present inventors thereby completed the present invention.

That is, the present invention is as follows.

The present invention relates to:

(1) an electrostatic adsorbable sheet comprising: a support layer (A) comprising a thermoplastic resin film having undergone charging treatment; and protective layers (B) comprising a dielectric film, wherein the protective layers (B) are laminated on both surfaces of the support layer (A) by means of electrostatic adsorption,

(2) an electrostatic adsorbable sheet comprising: a support layer (A) comprising a thermoplastic resin film; and

protective layers (B) comprising a dielectric film having undergone charging treatment, wherein the protective layers (B) are laminated on both surfaces of the support layer (A) by means of electrostatic adsorption,

(3) The thermoplastic resin film preferably comprises at least one type selected from polyolefin-based resins and functional group-containing polyolefin-based resins; and

(4) The dielectric film preferably comprises at least one type selected from the group consisting of polyolefin-based resins, functional group-containing polyolefin-based resins, polyamide-based resins, and thermoplastic polyester resins.

(5) A surface resistivity of both surfaces of the support layer (A) is preferably respectively from $1 \times 10^{13}$ to $9 \times 10^{17}$ $\Omega$; and

(6) a surface resistivity of a surface of the protective layer (B) in contact with the support layer (A) is preferably from $1 \times 10^{13}$ to $9 \times 10^{17}$ $\Omega$, and a surface resistivity of a surface of the protective layer (B) not in contact with the support layer (A) is preferably from $1 \times 10^{-1}$ to $9 \times 10^{12}$ $\Omega$.

(7) A total light transmittance of the support layer (A) is preferably from 60 to 100%.

(8) A thickness of the support layer (A) is preferably from 20 to 500 $\mu$m, and a thickness of the protective layer (B) is preferably from 10 to 200 $\mu$m.

(9) Charging treatment preferably comprises at least DC corona discharge treatment.

(10) Charging treatment is preferably performed on both surfaces of the thermoplastic resin film.

(11) In addition, the support layer (A) may be a laminate comprising at least two thermoplastic resin films.

(12) In the case of (11), the electrostatic adsorbable sheet may be obtained by laminating two electrostatic adsorbable laminates via an adhesive agent so that the thermoplastic resin films are in contact with one another, in which the two electrostatic adsorbable laminates are obtained by laminating a protective layer (B) on one surface of a thermoplastic resin film having undergone charging treatment by means of electrostatic adsorption.

(13) In the case of (11), a surface resistivity of a surface of the thermoplastic resin film in contact with the protective layer (B) is preferably from $1 \times 10^{13}$ to $9 \times 10^{17}$ $\Omega$, and a surface resistivity of a surface of the thermoplastic resin film not in contact with the protective layer (B) is preferably from $1 \times 10^{-1}$ to $9 \times 10^{12}$ $\Omega$.

(14) A product of a surface potential on a front side of the support layer (A) and a surface potential on a back side of the support layer (A) obtained by peeling the entire protective layer (B) from the electrostatic adsorbable sheet of the present invention is preferably a negative value.

(15) A product of a surface potential on a front side of the support layer (A) and a surface potential on a back side of the support layer (A) obtained by peeling the entire protective layer (B) from the electrostatic adsorbable sheet of the present invention is preferably from -0.07 to -4.00 kV$^2$.

(16) The present invention includes a display object obtained by peeling one protective layer (B) from the electrostatic adsorbable sheet of any one of (1) to (15) described above, laminating printed matter on one surface of the support layer (A) by means of electrostatic adsorption, then peeling the other protective layer (B) of the electrostatic adsorbable sheet, and attaching the other surface of the support layer (A) to an adherend by means of electrostatic adsorption.

Advantageous Effects of Invention

The support layer (A) constituting the electrostatic adsorbable sheet of the present invention has electrostatic adsorbability on both surfaces thereof, so printed matter and an adherend can be attached via the sheet.

The electrostatic adsorbable sheet of the present invention can be used to post or display printed matter or the like for a long period of time, and the printed matter or the like can be easily peeled and separated after use.

With the electrostatic adsorbable sheet of the present invention, it is possible to attach and display printed matter on an adherend as a poster, an advertisement, or the like without using a pressure-sensitive adhesive or the like. In addition, the electrostatic adsorbable sheet has a high electrostatic adsorptive force when used for display, and the persistence of the electrostatic adsorptive force is also sufficient, so the sheet can be used for display on an adherend over a long period of time and can be easily peeled after use. Moreover, the electrostatic adsorbable sheet has the feature that the electrostatic adsorptive force is unlikely to be affected by humidity. Furthermore, since the electrostatic adsorbable sheet does not express its electrostatic adsorptive force to the outside in a state in which the protective layer (B) is laminated on both surfaces prior to display use, it is unlikely to induce troubles such as the sticking of the electrostatic adsorbable sheet or the like in the printing process, the cutting process, or the transportation process, in particular, and the sheet has good handlability. Therefore, this electrostatic adsorbable sheet can accommodate the display type of a wide variety of printed matter.

In addition, the support layer (A) of the electrostatic adsorbable sheet is transparent or translucent, so information such as characters or a pattern on the printed matter can be viewed through the support layer (A) and the transparent adherend from a display object formed by the adsorption of the printed matter to the sheet.

Furthermore, the display object is unlikely to cause air remaining between the printed matter and the adherend at the time of attachment, and the display position can be adjusted easily after attachment.

Brief Description of Drawings

FIG. 1 is a cross-sectional view of an aspect of an electrostatic adsorbable sheet 1 not belonging to the invention in which a protective layer (B) 3 having a coating layer (C) 8 is laminated on one surface of a support layer (A) 2 by means of adsorption by an electrostatic adsorbable surface 10.

FIG. 2 is a cross-sectional view of another aspect of an electrostatic adsorbable sheet 1 of the present invention in which protective layers (B) 3a and 3b having coating layers (C) 8a and 8b are laminated on both surfaces of a support layer (A) 2 by means of adsorption by electrostatic adsorbable surfaces 10a and 10b.

FIG. 3 is a cross-sectional view of another aspect of an electrostatic adsorbable sheet 1 not belonging to the invention in which two thermoplastic resin films 4a and 4b are attached to one another via an adhesive agent 5 to form a support layer (A) 2.

FIG. 4 is a cross-sectional view of another aspect of an electrostatic adsorbable sheet 1 of the present invention in which two sets of the electrostatic adsorbable sheets illustrated FIG. 1 are attached to one another via an adhesive agent 5.

FIG. 5 is a cross-sectional view of another aspect of an electrostatic adsorbable sheet 1 not belonging to the invention in which a coating layer (C) 9 is provided between the thermoplastic resin film 4b and the adhesive agent 5 in FIG. 3.

FIG. 6 is a cross-sectional view of another aspect of an electrostatic adsorbable sheet 1 of the present invention in which a protective layer (B) 3a having a coating layer (C) 8a on one surface is laminated on a thermoplastic resin film surface of the electrostatic adsorbable sheet by means of adsorption by an electrostatic adsorbable surface 10a in FIG. 5.

FIG. 7 is a cross-sectional view of another aspect of an electrostatic adsorbable sheet 1 not belonging to the invention in which a protective layer (B) 3b having a coating layer 8b is laminated, by means of adsorption by an electrostatic adsorbable surface 10, on one surface of a support layer (A) 2 obtained by attaching the sides of coating layers (C) 9a and 9b of two sets of thermoplastic resin films 4a and 4b having a coating layer (C) on one surface to one another via an adhesive agent 5.

FIG. 8 is a cross-sectional view of another aspect of an electrostatic adsorbable sheet 1 of the present invention in which a protective layer (B) 3a having a coating layer 8a is laminated on a thermoplastic resin film surface 4a of the electrostatic adsorbable sheet by means of adsorption by an electrostatic adsorbable surface 10a in FIG. 7.

FIG. 9 is an example of a batch-type corona discharge treatment apparatus which can be used in the charging treatment of the present invention using a needle-shaped application electrode 13 as a main electrode.

FIG. 10 is an example of a batch-type corona discharge treatment apparatus which can be used in the charging treatment of the present invention using a metal wire-shaped application electrode 15 as a main electrode.

FIG. 11 is an example of a continuous-type corona discharge treatment apparatus which can be used in the charging treatment of the present invention using a needle-shaped application electrode 16 as a main electrode.

FIG. 12 is an example of a continuous-type corona discharge treatment apparatus which can be used in the charging treatment of the present invention using a metal wire-shaped application electrode 18 as a main electrode.

FIG. 13 is an example of a continuous-type corona discharge treatment apparatus which can be used in the charging treatment of the present invention using a needle-shaped application electrode 19 as a main electrode.

FIG. 14 is an example of a production apparatus for an electrostatic adsorbable laminate used in the working examples of the present invention.

FIG. 15 is an example of a measurement apparatus for the electrostatic adsorptive force used in the working examples of the present invention.

FIG. 16 is an example of a measurement apparatus for the surface potential used in the working examples of the present invention.

FIG. 17 is an example of a measurement location 45 of the surface potential in the working examples of the present invention.

FIG. 18 is an aspect of a display object using a support layer (A) 53 obtained by removing a protective layer (B) from the electrostatic adsorbable sheet of the present invention.

FIG. 19 is a cross-sectional view of a display object 51 of the present invention formed by attaching printed matter 54 to a glass sheet 52 using a support layer (A) 53 obtained by peeling a protective layer (B) from one surface of an electrostatic adsorbable sheet.

FIG. 20 is another aspect of a display object of the present invention in which the peeled protective layer (B) 55 is electrostatically adsorbed onto printed matter 54 in FIG. 18.

FIG. 21 is a cross-sectional view of a display object 51 of the present invention in which the protective layer (B) 55 is electrostatically adsorbed onto the printed matter 54 in FIG. 19.

Description of Embodiments

The electrostatic adsorbable sheet of the present invention comprises a laminate which is laminated by means of electrostatic adsorption, protective layers (B) comprising a dielectric film on both surfaces of a support layer (A) comprising a thermoplastic resin film having undergone charging treatment, or a laminate which is laminated by means of electrostatic adsorption, protective layers (B) comprising a dielectric film having undergone charging treatment on both surfaces of a support layer (A) comprising a thermoplastic resin film.

The electrostatic adsorbable sheet of the present invention is unlikely to accumulate static electricity due to the protective layer (B) disposed on both surfaces thereof, but the support layer (A) from which the protective layer (B) is peeled can itself be electrostatically adsorbed to the adherend due to static electricity. Of these, in an aspect in which protective layers (B) are laminated on both surfaces of the support layer (A), the support layer (A) from which the protective layers (B) on both surfaces are peeled can electrostatically adsorb non-adhesive printed matter or the like, and the surface on the opposite side can also be electrostatically adsorbed to the adherend.

Each member constituting the electrostatic adsorbable sheet of the present invention will be described in detail hereinafter. In the present invention, "mass" refers to "weight".

[Support layer (A)]

The support layer (A) constituting the electrostatic adsorbable sheet has electrostatic adsorbability on both surfaces. For example, by interposing the support layer (A) between the non-adhesive printed matter or the like on one surface and the adherend on the other surface so as to bind one another by electrostatic adsorption, it is possible to attach the printed matter or the like to the adherend in the form of a so-called double-sided adhesive sheet. A display object obtained in this way can be used as a display object such as a seal, a label, a sign, a poster, or an advertisement in accordance with the display content, dimensions, shape, and display format.

The support layer (A) can be used to attach and display printed matter or the like on various adherend due to the electrostatic adsorption thereof. In addition, when used for display, the electrostatic adsorptive force is high, and the persistence of the electrostatic adsorptive force is also sufficient, so the sheet has the feature that printed matter or the like can be displayed and used over a long period of time and can be easily peeled after use. Moreover, the sheet has the feature that the electrostatic adsorptive force is unlikely to be affected by humidity.

The support layer (A) is a layer comprising a thermoplastic resin film, the details of which will be described below, and can be obtained by performing charging treatment on the film. A single thermoplastic resin film may be used as the support layer (A), or two or more thermoplastic resin films may be attached to form the support layer (A).

When a single thermoplastic resin film is used as the support layer (A), an electrostatic adsorbable sheet may be formed by performing charging treatment on both surfaces of the thermoplastic resin film and then providing protective layers (B) on both surfaces thereof. Alternatively, an electrostatic adsorbable sheet may be formed by performing charging treatment on one surface of the thermoplastic resin film and providing a protective layer (B) on the treated surface so as to first produce an electrostatic adsorbable laminate, and then performing charging treatment on the surface on the thermoplastic resin film side of the laminate and providing a protective layer (B) on the treated surface thereof.

In addition, it is also possible to use a single thermoplastic resin film by performing charging treatment on one surface of a protective layer (B) and then laminating the layer on the thermoplastic resin film as a support layer (A). This method yields an aspect in which protective layers (B) are laminated on both surfaces of the support layer (A). Furthermore, a laminate in which protective layers (B) are laminated on both surfaces of the support layer (A) is obtained by preparing an electrostatic adsorbable laminate having a protective layer (B) laminated on one surface of the support layer (A) in advance, performing charging treatment on one surface of a protective layer (B) prepared separately, and then electrostatically adsorbing the protective layer (B) onto the surface on the thermoplastic resin film side of the electrostatic adsorbable laminate.

A laminate of two or more thermoplastic resin films can also be used as the support layer (A) in the same manner as a single thermoplastic resin film.

On the other hand, when two thermoplastic resin films are attached to form the support layer (A), the support layer (A) can be obtained by performing charging treatment on one surface of a thermoplastic resin film and then laminating a protective layer (B) on the treated surface thereof or laminating the treated surface side of a protective layer (B) that has undergone charging treatment on one surface of a thermoplastic resin film so as to first produce an electrostatic adsorbable laminate comprising a thermoplastic resin film and a protective layer (B), and then attaching the thermoplastic resin film surfaces of two electrostatic adsorbable laminates to one another via an adhesive agent. In this case, the obtained "thermoplastic resin film/adhesive agent/thermoplastic resin film" portion serves as the support layer (A).

In addition, when two or more thermoplastic resin films are attached to form the support layer (A), the support layer (A) can be obtained by performing charging treatment on one surface of a thermoplastic resin film and then laminating a protective layer (B) on the treated surface thereof or laminating the treated surface side of a protective layer (B) that has undergone charging treatment on one surface of a thermoplastic resin film so as to first produce an electrostatic adsorbable laminate comprising a thermoplastic resin film and a protective layer (B), then attaching another thermoplastic resin film and the thermoplastic resin film surface of the electrostatic adsorbable laminate via an adhesive agent, and then attaching the other thermoplastic resin film surface and the thermoplastic resin film surface of one more electrostatic adsorbable laminate via an adhesive agent. In this case, the obtained "thermoplastic resin film/adhesive agent/other thermoplastic resin film/adhesive agent/thermoplastic resin film" portion serves as the support layer (A).

In order to provide the support layer (A) with electrostatic adsorbability on both surfaces, the support layer (A) preferably has a structure with which charging treatment can be performed easily and which easily holds a charge induced by charging treatment internally.

The ease of charging treatment and the charge holding performance of the support layer (A) can be established using the surface resistivity. The surface resistivity of the support layer (A), which is measured by a method described later, is preferably within a range of from $1 \times 10^{13}$ to $9 \times 10^{17}$ $\Omega$ on both the front and back surfaces. The surface resistivity is preferably within a range of from $5 \times 10^{13}$ to $9 \times 10^{16}$ $\Omega$ and even more preferably within a range of from $1 \times 10^{14}$ to $9 \times 10^{15}$ $\Omega$.

When the surface resistivity is less than $1 \times 10^{13}$ $\Omega$, the charge applied when performing charging treatment tends to escape through the surface, which tends to make it difficult to perform charging treatment. In addition, the charge first applied to the support layer (A) tends to escape to the outside (the atmosphere or the like) through the surface, which prevents the support layer (A) from holding a charge for a long period of time and tends to diminish the electrostatic adsorptive force.

On the other hand, when the surface resistivity exceeds $9 \times 10^{17}$ $\Omega$, although there should not be any problem with performance, it is difficult to form such a high-insulation surface using a currently known substance, and even if this could be realized, the cost would be high, so such a configuration is difficult to realize.

A support layer (A) having such a surface resistivity can be achieved by the selection of the thermoplastic resin film constituting the layer and the presence or absence of surface treatment on the thermoplastic resin film such as a coating layer (C) described later.

Therefore, when a single thermoplastic resin film is used as the support layer (A), it is preferable to set the surface resistivity of the both surface of the film to within a range of from $1 \times 10^{13}$ to $9 \times 10^{17}$ $\Omega$ without performing antistatic treatment or the like on thermoplastic resin film itself.

However, when two or more thermoplastic resin films are attached so as to form a support layer (A), by setting the surface resistivity of one surface of one of the thermoplastic resin films to within a range of from $1 \times 10^{13}$ to $9 \times 10^{17}$ $\Omega$ and performing antistatic treatment on one surface of the other thermoplastic resin film so as to provide an antistatic performance and reduce the surface resistivity of the other surface. This makes it possible to effectively prevent the adherence of dust or the like to the film or the attachment of the film to a roll in a processing step leading up to the point when the electrostatic adsorbable laminate is produced by performing charging treatment on a thermoplastic resin film and then attaching and laminating a protective layer (B). In addition, this makes it possible to further enhance productivity, which is thus preferable in the production of the electrostatic adsorbable sheet of the present invention.

Techniques for providing a thermoplastic resin film with antistatic performance include a technique of kneading an antistatic agent into the thermoplastic resin film and a technique of providing a coating layer (C) described later on one surface of the thermoplastic resin film. When an antistatic agent is kneaded into the thermoplastic resin film, an antistatic effect may not be realized unless corona discharge surface treatment or frame surface treatment is performed, and the antistatic effect may differ substantially between a surface-treatment surface and an untreated surface of a stretched film, in particular. It is also possible to utilize this phenomenon to form a thermoplastic resin film having antistatic performance on one surface.

In addition, when the adherent is an opaque object such as a wall or a locker, the support layer (A) may be transparent or opaque, but it is more preferable for the transparency to be high when the adherend is a transparent plate-like object such as a glass plate, an acrylic plate, or a polycarbonate plate. For example, when the printed matter used for display is a double-sided printed matter and the support layer (A) and the adherend are transparent, the printed surface of the printed matter on the side in contact with the support layer (A) can also be viewed through the support layer (A) and the adherend.

Accordingly, the support layer (A) of the electrostatic adsorbable sheet of the present invention is preferably transparent or translucent. As an index of this transparency, the total light transmittance of the support layer (A) is preferably from 60 to 100%, more preferably from 70 to 100%, and particularly preferably from 80 to 100%. As long as the total light transmittance is at least 60%, the visibility of the image or information of the printed matter is good when attached on the support layer (A) side facing the print pattern, and the visibility of printed matter attached to a transparent adherend such as a glass plate, an acrylic plate, or a polycarbonate plate is good.

In addition, the support layer (A) itself may have printed information within a range that does not diminish the effect of the present invention.

Such high transparency can be achieved by the selection of the thermoplastic resin film constituting the layer, the content of an inorganic fine powder or organic filler in the thermoplastic resin, and the like.

In addition, the thickness of the support layer (A) is preferably within a range of from 20 to 500 μm. The thickness is preferably within a range of from 30 to 400 μm and particularly preferably within a range of from 40 to 300 μm. When the thickness of the support layer (A) is less than 20 μm, the mechanical strength of the layer (A) becomes poor, and wrinkles tend to develop when printed matter is attached or when the layer is attached to an adherend, prevents proper attachment and tends to diminish the appearance. Conversely, when the thickness exceeds 500 μm, the weight of the support layer (A) itself becomes large, and its own weight cannot be held by the electrostatic adsorptive force, so the layer tends to fall off of the adherend.

[Thermoplastic resin film]

The thermoplastic resin film constitutes the support layer (A) and holds a charge internally as a result of being subjected to charging treatment directly or being placed in contact with a dielectric film that has undergone charging treatment so as to be charged, and the electrostatic adsorption of the support layer (A) is enabled by the electrostatic adsorptive force thereof.

The thermoplastic resin film comprises a thermoplastic resin. In particular, by using a thermoplastic resin having excellent insulation, the film easily holds an accumulated charge internally, which is preferable.

The type of the thermoplastic resin used in the thermoplastic resin film is not particularly limited as long as it is an insulating resin and can hold a charge internally. Examples of such thermoplastic resins include polyolefin-based resins such as high-density polyethylene, medium-density polyethylene, low-density polyethylene, propylene-based resins, and polymethyl-1-pentene; functional group-containing polyolefin-based resins such as ethylene/vinyl acetate copolymers, ethylene/acrylic acid copolymers, maleic acid-modified polyethylene, and maleic acid-modified polypropylene; polyamide-based resins such as nylon-6 and nylon-6,6; thermoplastic polyester-based resins such as polyethylene terephthalate, polybutylene terephthalate, and aliphatic polyesters such as polybutylene succinate, polylactic acid, or copolymers thereof; polycarbonate-based resins; and polystyrene-based resins such as atactic polystyrene and syndiotactic polystyrene. Of these thermoplastic resins, it is preferable to use polyolefin-based resins and functional group-containing polyolefin-based resins having excellent insulation and workability.

More specific examples of polyolefin-based resins include homopolymers of olefins such as ethylene, propylene, butylene, hexene, octene, butadiene, isoprene, chloroprene, and methyl-1-pentene; and copolymers of two or more types of these olefins.

Furthermore, of these polyolefin-based resins, propylene-based resins are preferably used from the perspective of insulation, charge holding capacity, workability, mechanical strength, cost, and the like. As such a propylene-based resin, a polypropylene (propylene homopolymer) exhibiting isotactic or syndiotactic and various degrees of stereoregularity, or a propylene-based copolymer prepared using propylene as a main component and copolymerizing this with an α-olefin such as ethylene, 1-butene, 1-hexene, 1-heptene, or 4-methyl-1-pentene is preferably used. The propylene-based copolymer may be a bipolymer or a terpolymer or higher polymer primarily containing propylene, or it may be a random copolymer or a block copolymer. In addition, a resin having a lower melting point than the propylene-based homopolymer may also be blended into the propylene resin. Examples of resins having such a low melting point include polyethylenes of high to low density.

More specific examples of functional group-containing polyolefin-based resins include copolymers of the aforementioned olefins and copolymerizable functional group-containing monomers. Examples of such functional group-containing monomers include styrenes such as styrene and α-methylstyrene; vinyl carboxylate esters such as vinyl acetate, vinyl propionate, vinyl butyrate, vinyl pivalate, vinyl caproate, vinyl laurate, vinyl stearate, vinyl benzoate, vinyl butylbenzoate, and vinyl cyclohexanecarboxylate (or vinyl alcohols obtained by saponifying these vinyl carboxylate esters after copolymerization); (meth)acrylic acids and esters thereof such as acrylic acids, methacrylic acids, methyl(meth)acrylate, ethyl(meth)acrylate, butyl(meth)acrylate, hexyl(meth)acrylate, octyl(meth)acrylate, 2 -ethylhexyl(meth)acrylate, stearyl(meth)acrylate, benzyl(meth)acrylate, cyclohexyl(meth)acrylate, isobonyl(meth)acrylate, and dicyclopentanyl(meth)acrylate; (meth)acrylamides such as (meth)acrylamide and N- methylol(meth)acrylamide; and vinyl ethers such as methyl vinyl ether, ethyl vinyl ether, propyl vinyl ether, butyl vinyl ether, cyclopentyl vinyl ether, cyclohexyl vinyl ether, benzyl vinyl ether, and phenyl vinyl ether and the like. One type or two or more types may be selected appropriately as necessary from these functional group-containing monomers and copolymerized before use.

In addition, graft-modified derivatives may also be used as necessary for these polyolefin-based resins and functional group-containing polyolefin-based resins in order to adjust the insulation or electrostatic voltage thereof.

A known technique may be employed for the graft modification of the resin. One specific example is graft modification using an unsaturated carboxylic acid or a derivative thereof. Examples of unsaturated carboxylic acids include acrylic acid, methacrylic acid, maleic acid, fumaric acid, itaconic acid, and citraconic acid and the like. In addition, examples of derivatives of the unsaturated carboxylic acids described above include acid anhydrides, esters, amides, imides, and metal salts and the like.

Specific examples include maleic anhydride, itaconic anhydride, citraconic anhydride, methyl (meth)acrylate, ethyl(meth)acrylate, butyl(meth)acrylate, glycidyl(meth)acrylate, monoethyl maleate esters, diethyl maleate esters, monomethyl fumarate esters, dimethyl fumarate esters, monomethyl itaconate esters, diethyl itaconate esters, (meth)acrylamide, maleic monoamide, maleic diamide, maleic-N-monoethylamide, maleic-N,N-diethylamide, maleic-N-monobutylamide, maleic-N,N-dibutylamide, fumaric monoamide, fumaric diamide, fumaric-N-monoethylamide, fumaric-N,N-diethylamide, fumaric-N-monobutylamide, fumaric-N,N-dibutylamide, maleimide, N-butylmaleimide, N-phenylmaleimide, sodium (meth)acrylate, and potassium (meth)acrylate and the like.

Graft-modified derivatives which are graft-modified ordinarily using from 0.005 to 10 mass% and preferably from 0.01 to 5 mass% of graft monomers with respect to the polyolefin-based resins and functional group-containing polyolefin-based resins can be used.

One type selected from among the thermoplastic resins described above may be used alone as the thermoplastic resin used in the thermoplastic resin film, or two or more types may be selected and used in combination.

In addition, at least one type selected from inorganic fine powders and organic fillers may be added to the thermoplastic resin film to a degree that does not diminish the transparency of the support layer (A) described above. By adding an inorganic fine powder or an organic filler, it is possible to adjust the dielectric constant of the film or to suppress the attachment of thermoplastic resin sheets to one another. In addition, it becomes easy to form voids inside the layer in combination with a stretching step described later, which enables a reduction in the weight of the thermoplastic resin film.

As an inorganic fine powder, for example, calcium carbonate, calcined clay, silica, diatomaceous earth, kaolin, talc, titanium oxide, barium sulfate, barium titanate, alumina, zeolite, mica, sericite, bentonite, sepiolite, vermiculite, dolomite, wollastonite, glass fibers, and the like may be used. When an inorganic fine powder is added, the average particle size, which is measured with a particle size analyzer using laser diffraction, is ordinarily from 0.01 to 15 μm and preferably from 0.1 to 5 μm.

When an organic filler is added, a resin of a different type from the thermoplastic resin serving as the main component of the thermoplastic resin film is preferably selected. For example, when the thermoplastic resin is a polyolefin-based resin, as an organic filler, immiscible polymers such as polyethylene terephthalate, polybutylene terephthalate, polycarbonate, nylon-6, nylon-6,6, cyclic olefin polymer, polystyrene, and polymethacrylate may be used. These are the polymers having a higher melting point (for example, from 170 to 300°C) or a higher glass transition temperature (for example, from 170 to 280°C) than the melting point of the polyolefin-based resin.

The compounding ratio of these inorganic fine powders or organic fillers in the thermoplastic resin film is preferably from 0 to 3 mass% and more preferably from 0 to 1 mass% in terms of the total amount, and it is particularly preferable not to intentionally add these components. When the compounding ratio is at most 3 mass%, it is easy to achieve the total light transmittance described above, and the image visibility through a transparent adherend is good.

Furthermore, a thermal stabilizer (antioxidant), a light stabilizer, a dispersant, a lubricant, a nucleating agent, or the like may be added to the thermoplastic resin film as necessary. When a thermal stabilizer is added, it is ordinarily added in an amount within a range of from 0.001 to 1 mass%. Specifically, sterically-hindered phenol-type, phosphorus-type, or amine-type stabilizers or the like can be used. When a light stabilizer is used, it is ordinarily used in an amount within a range of from 0.001 to 1 mass%. Specifically, sterically-hindered amine-type, benzotriazole-type, benzophenone-type light stabilizers or the like can be used. A dispersant or a lubricant is used, for example, for the purpose of dispersing an inorganic fine powder. The amount used is ordinarily within a range of from 0.01 to 4 mass%. Specifically, silane coupling agents, higher fatty acids such as oleic acid, stearic acid or the like, metal soap, polyacrylic acid, polymethacrylic acid, salts thereof or the like can be used.

[Multilayering]

The thermoplastic resin film may have a single-layer structure, a two layer structure, or a multilayer structure of three or more layers. The multilayering of the thermoplastic resin film enables the improvement of the charging performance or the addition of various functions such as writability, friction resistance, and secondary workability. When the thermoplastic resin film is formed with a multilayer structure, various known methods may be used. Specifically, there is multilayer die method using a feed block and a multi-manifold, an extrusion lamination method using a plurality of dies, and the like. A combination of a multilayer die and extrusion lamination may also be used.

[Stretching]

The thermoplastic resin film preferably contains a stretched resin film which is stretched at least uniaxially. A stretched thermoplastic resin film obtained by stretching is a lightweight, thin film having excellent thickness uniformity, so an electrostatic adsorptive force which is uniform in the plane direction and has no unevenness due to charging is easy to achieve. When the thermoplastic resin film has a multilayer structure, the number of stretching axes of each layer constituting the film may be uniaxial/uniaxial, uniaxial/biaxial, biaxial/uniaxial, uniaxial/uniaxial/biaxial, uniaxial/biaxial/uniaxial, biaxial/uniaxial/uniaxial, uniaxial/biaxial/biaxial, biaxial/biaxial/uniaxial, biaxial/biaxial/biaxial, or the like.

The stretching of the thermoplastic resin film can be performed with one of various methods that are ordinarily used or a combination thereof. Specific examples of stretching methods include machine-direction stretching utilizing the difference in circumferential speeds of a group of rolls, transverse-direction stretching using a tenter oven, sequential biaxial stretching which combines machine-direction stretching and transverse-direction stretching, rolling, simultaneous biaxial stretching by a combination of a tenter oven and a linear motor, simultaneous biaxial stretching by a combination of a tenter oven and a pantograph, and the like. Another example of a stretching method for an inflation film is simultaneous biaxial stretching using a tubular method.

The stretching ratio is not particularly limited and is determined as appropriate in consideration of the characteristics of the thermoplastic resin used in the thermoplastic resin film, the physical properties of the resulting thermoplastic resin film, and the like. For example, when a propylene homopolymer or a copolymer thereof is used as the thermoplastic resin and is stretched uniaxially, the stretching ratio is normally from 1.2 to 12 times and preferably from 2 to 10 times, and when stretched biaxially, the area ratio is normally from 1.5 to 60 times and preferably from 4 to 50 times. When another thermoplastic resin is used, when stretched uniaxially, the stretching ratio is normally from 1.2 to 10 times and preferably from 2 to 5 times, and when stretched biaxially, the area ratio is normally from 1.5 to 20 times and preferably from 4 to 12 times.

The temperature of stretching is determined as appropriate within a known temperature range favorable for thermoplastic resins, from not less than the glass transition temperature of the thermoplastic resin primarily used in the thermoplastic resin film to not greater than the melting point of the crystal portion. Specifically, when the thermoplastic resin of the thermoplastic resin film is a propylene homopolymer (melting point: 155 to 167°), the temperature is from 100 to 166°C, and in the case of high-density polyethylene (melting point: 121 to 136°), the temperature is from 70 to 135°C, which is from 1 to 70°C lower than the melting point. Furthermore, the stretching rate is preferably from 20 to 350 m/min.

When the thermoplastic resin film contains the aforementioned inorganic fine powder or organic filler and is stretched, fine voids may be formed inside the film. However, these voids substantially inhibit the light transmittance of the thermoplastic resin film. Therefore, the porosity of the thermoplastic resin film calculated from the following formula (1) is preferably from 0 to 10% and more preferably from 0 to 5%. When the porosity exceeds 10%, this leads to a decrease in the light transmittance of the thermoplastic resin film due to the light scattering effect of the voids, which tends to make it difficult to obtain a support layer (A) having the desired total light transmittance.

[Formula 1]

$$\text{Porosity (\%)} = \frac{\rho_0 - \rho}{\rho_0} \times 100 \quad \cdots\cdots \quad (1)$$

(In formula (1), $\rho_0$ represents the true density of the thermoplastic resin film, and $\rho$ represents the density of the thermoplastic resin film)

The true density of the thermoplastic resin film in the above formula is determined by measuring the density of a state-adjusted sample after heat-compressing the thermoplastic resin film to eliminate the voids of the film.

Specifically, after the film is compressed for at least three minutes at a pressure of at least 3 MPa using a compression molding device set to a temperature from 10 to 150°C higher than the melting point or the glass transition temperature of the thermoplastic resin used in the thermoplastic resin film, the sheet is cooled for at least three minutes at a pressure of 3 MPa with a compression molding device set to at most 25°C and voids in the thermoplastic resin film are eliminated. After the state of the sample is adjusted for at least 24 hours using an oven set to a temperature from 10 to 70°C lower than the melting point or the glass transition temperature of the thermoplastic resin used in the thermoplastic resin film, state adjustment is performed for at least 24 hours in an environment at 23°C with a relative humidity of 50%. The density is measured with the method described in JIS-K-7112:1999.

The density of the thermoplastic resin film in the above formula is determined from the following formula using the weight Wf (g/cm$^2$) obtained by punching out the thermoplastic resin film into a size of 10 cm x 10 cm and measuring the weight, and the thickness Tf (cm) measured using the Constant Pressured Thickness Measurement Instrument described in JIS-K-7130:1999.

$$\rho = Wf/Tf$$

$\rho$: density of the thermoplastic resin film (g/cm$^3$)
Wf: weight of the thermoplastic resin film (g/cm$^2$)
Tf: thickness of the thermoplastic resin film (cm)

When the thermoplastic resin film contains the aforementioned inorganic fine powder or organic filler and is stretched, the formation of voids in the thermoplastic resin film can be reduced by adopting measures such as increasing the stretching temperature to the vicinity of the melting point of the thermoplastic resin.

[Protective layer (B)]

The protective layer (B) constituting the electrostatic adsorbable sheet is laminated on both surfaces of the support layer (A) by the electrostatic adsorptive force of the support layer (A) or the electrostatic adsorptive force of the protective layer (B) itself. The protective layer (B) is removed like the release liner of a pressure-sensitive adhesive label at the time of the use of the support layer (A).

The protective layer (B) blocks the outflow of charge from the inside to the outside until the electrostatic adsorbable sheet is used for the display or the like of printed matter, and it makes it easy to handle the electrostatic adsorbable sheet without the electrostatic adsorptive force inside the electrostatic adsorbable sheet being expressed to the outside.

Therefore, the protective layer (B) contains a dielectric film, and the surface in contact with the support layer (A) is made of a dielectric. The protective layer (B) can be laminated on the support layer (A) by the electrostatic adsorptive force of the support layer (A) or the protective layer (B). On the other hand, the other surface of the protective layer (B) preferably has antistatic performance. When the protective layer (B) has antistatic performance on one surface, an electrostatic adsorbable sheet in which the protective layers (B) are provided on both surfaces of the support layer (A) has antistatic performance on both surfaces. As a result, the electrostatic adsorbable sheet serving as a laminate does not express its electrostatic adsorptive force to the outside, so troubles such as sticking to the periphery or sticking to one another are unlikely to occur at the time of handling such as the shipping, storage, and printing of the electrostatic adsorbable sheet, which yields good handleability.

Accordingly, the protective layer (B) is removed in the same manner as the release liner of a pressure-sensitive adhesive label when the support layer (A) is used, but it facilitates handling such as the printing of the electrostatic adsorbable sheet while protecting the high electrostatic adsorptive force of the support layer (A) in the previous stage.

The surface (outer surface) of the protective layer (B) of the electrostatic adsorbable sheet on the side not in contact with the support layer (A) can be colored or printed in the same manner as the release liner of a pressure-sensitive adhesive label. On the other hand, the surface (inner surface) of the protective layer (B) on the side in contact with the support layer (A) has electrostatic adsorbability. Therefore, the protective layer (B) that is peeled from the electrostatic adsorbable sheet can be adsorbed to the adherend as a single unit. This differs in nature from the release liner of a pressure-sensitive adhesive label. This characteristic also makes it possible to use a protective layer (B) having printed information as a bulletin object.

The protective layer (B) may have a single-layer structure or a multilayer structure of two or more layers. As described above, the protective layer (B) is preferably configured so that one surface of the protective layer (B) can come into contact with the support layer (A) and be electrostatically adsorbed, and so that the opposite surface has antistatic performance, so a multilayer structure is preferable.

From the perspective of reducing the migration of charge from the support layer (A), the protective layer (B) contains a dielectric film having excellent insulation on the surface in contact with the support layer (A). When the protective layer (B) has a multilayer structure, a known material such as paper, synthetic paper, a resin film of a different composition, woven fabric, a nonwoven fabric, or an antistatic coating layer is selected appropriately and laminated on the other surface out of consideration of the imparting of antistatic performance. When the protective layers (B) are laminated on both surfaces of the support layer (A), one set of protective layers (B) may have the same composition or structure or may have a different composition or structure.

In addition, the surface of the protective layer (B) on the dielectric film side may be provided with electrostatic adsorptive force by performing charging treatment directly on the surface, and the layer can be attached to an untreated thermoplastic resin film due to this electrostatic adsorptive force so as to form an electrostatic adsorbable sheet. In this case, the support layer (A) side is charged by the charge of the protective layer (B) so as to be provided with electrostatic adsorptive force.

[Dielectric film]

An example of a dielectric film is a film obtained from at least one type selected from the group consisting of the polyolefin-based resins, functional group-containing polyolefin-based resins, polyamide-based resins, thermoplastic polyester-based resins, and the like listed as examples of the aforementioned thermoplastic resin film.

Examples of dielectric films include films of polyolefin-based resins such as high-density polyethylene, medium-density polyethylene, low-density polyethylene, propylene-based resins, and polymethyl-1-pentene; functional group-containing polyolefin-based resins such as ethylene-vinyl acetate copolymers, ethylene-acrylic acid copolymers, maleic acid-modified polyethylene, and maleic acid-modified polypropylene; polyamide-based resins such as nylon-6 and nylon-6,6; thermoplastic polyester-based resins such as polyethylene terephthalate, or copolymers thereof, polybutylene terephthalate, and aliphatic polyesters such as polybutylene succinate, and polylactic acid; and thermoplastic resin films such as polycarbonate, atactic polystyrene, and syndiotactic polystyrene listed as examples of the aforementioned thermoplastic resin film; and films of thermosetting resins such as phenol resins, melamine resins, urea resins, urethane resins, epoxy resins, and unsaturated polyester resins. Of these, it is preferable to use films of polyolefin-based resins, functional group-containing polyolefin-based resins, polyamide-based resins, thermoplastic polyester resins, and the like having excellent formability.

The protective layer (B) serves the role of sealing the sheet so that the charge of the support layer (A) does not escape to the outside. This ability to confine the charge can be established by the specific dielectric constant. The specific dielectric constant of the dielectric film is preferably within a range of from 1.1 to 5.0, more preferably from 1.2 to 4.0, and even more preferably from 1.5 to 3.0. When the specific dielectric constant of the dielectric film exceeds 5.0, the support layer (A) cannot hold a charge for a long period of time, and the electrostatic adsorptive force tends to decrease easily. On the other hand, when the specific dielectric constant is less than 1.1, although there should be no problem with performance, the value is lower than the specific dielectric constant of air (vacuum), so such a material is difficult to procure with current technology.

Such a specific dielectric constant can be achieved within a the prescribed range due to the fact that the dielectric film comprises the thermoplastic resin film described above or due to processing for forming voids inside the film.

In addition, from the perspective of reducing the migration of charge, it is preferable for the surface resistivity of the surface of the protective layer (B) in contact with the support layer (A) - that is, the surface on the dielectric film side - to be higher, as in the case of the support layer (A). Specifically, the surface resistivity of the surface of the protective layer (B) in contact with the support layer (A) is preferably within a range of from $1 \times 10^{13}$ to $9 \times 10^{17}$ $\Omega$. The surface resistivity is more preferably within a range of from $5 \times 10^{13}$ to $9 \times 10^{16}$ $\Omega$ and even more preferably within a range of from $1 \times 10^{14}$ to $9 \times 10^{15}$ $\Omega$. When the surface resistivity is less than $1 \times 10^{13}$, the charge of the support layer (A) tends to escape to the outside through the front surface, which prevents the support layer (A) from holding a charge for a long period of time and tends to diminish the electrostatic adsorptive force. On the other hand, when the surface resistivity exceeds $9 \times 10^{17}$ $\Omega$, although there should not be any problem with performance, it is difficult to form such a high-insulation surface using a currently known substance, and even if this could be realized, the cost would be high, so such a configuration is difficult to realize.

On the other hand, the protective layer (B) preferably has antistatic performance on one surface. Examples of methods of providing the protective layer (B) with antistatic performance include a method of providing a coating layer (C) described later, a method of providing a conductive layer by applying a conductive coating, a method of providing a metal thin film by means of direct deposition, transfer deposition, or the lamination of a deposited film, and a method of using paper subjected to antistatic treatment, synthetic paper, a resin film, a woven fabric, a nonwoven fabric, or a resin film into which an antistatic agent is kneaded as the material for forming the protective layer (B) and laminating the layer.

In an aspect in which a resin film into which an antistatic agent is kneaded is used, an antistatic effect may not be realized unless corona discharge surface treatment or frame surface treatment is performed on the film surface, and the antistatic effect may differ substantially between a surface-treatment surface and an untreated surface of a stretched film, in particular. By utilizing this phenomenon to form a dielectric film by stretching a thermoplastic resin film into which an antistatic agent is kneaded and performing surface treatment such as corona discharge on one surface thereof, it is also possible to form a protective layer (B) having antistatic performance on one surface while having a single-layer structure.

In the method described above, the surface resistivity of the surface of the protective layer (B) not in contact with the support layer (A) - that is, the surface positioned on the outer layer of the electrostatic adsorbable sheet - is preferably within a range of from $1 \times 10^{-1}$ to $9 \times 10^{12}$ $\Omega$ and more preferably within a range of from $1 \times 10^{0}$ to $9 \times 10^{12}$ $\Omega$. When the surface resistivity of the surface of the protective layer (B) not in contact with the support layer (A) exceeds $9 \times 10^{12}$ $\Omega$, the antistatic performance is insufficient, so troubles such as attachment to the periphery of the electrostatic adsorbable sheet or the attachment of sheets to one another tend to occur easily, which diminishes the handleability and tends to make it difficult to achieve the prescribed performance of the present invention. On the other hand, when the surface resistivity is less than $1 \times 10^{-1}$ Ω, although there should not be any problem with performance as an electrostatic adsorbable sheet, it is difficult to form such a highly conductive surface using a currently known substance, and even if this could be realized, the cost would be high, so such a configuration is difficult to realize.

[Coating layer (C)]

A coating layer (C) is preferably provided on one surface of the thermoplastic resin film or dielectric film constituting the electrostatic adsorbable sheet. A support layer (A) comprising two thermoplastic resin films can be obtained by first producing an electrostatic adsorbable laminate using a thermoplastic resin film having a coating layer (C) provided on one surface thereof, and then attaching the coating layers (C) of two electrostatic adsorbable laminates to one another via an adhesive agent. In addition, a protective layer (B) can be formed using a dielectric film having a coating layer (C) provided on one surface thereof.

The coating layer (C) is used to impart antistatic performance to the thermoplastic resin film or the dielectric film. The composition of the coating layer (C) preferably comprises from 0.1 to 100 mass% of an antistatic agent, from 0 to 99.9 mass% of a polymer binder, and from 0 to 70 mass% of pigment particles. The coating layer (C) can be provided as a coating agent containing these components by direct application on the thermoplastic resin film or the dielectric film, or by forming the coating layer (C) by applying the coating agent to a separate film in advance and laminating the layer on the thermoplastic resin film or the dielectric film.

The antistatic agent is added in order to impart antistatic performance to the coating layer (C). Specific examples thereof include low-molecular-weight organic compound-based antistatic agents represented by stearic acid monoglyceride, alkyldiethanolamine, sorbitan monolaurate, alkylbenzenesulfonate, alkyldiphenyl ether sulfonate, and the like; conductive inorganic fillers represented by ITO (indium-doped tin oxide), ATO (antimony-doped tin oxide), graphite whisker, and the like; so-called electron conductive polymers exhibiting conductivity with π electrons in molecular chains, such as polythiophene, polypyrrole, and polyaniline; non-ionic polymer-based antistatic agents such as polyethylene glycol and polyoxyethylenediamine; quaternary ammonium salt-type copolymers such as polyvinylbenzyltrimethylammonium chloride and polydimethylaminoethyl methacrylate quaternary compounds; and polymers having antistatic performance represented by alkali metal salt-containing polymers such as alkali metal ion adducts to alkylene oxide group- and/or hydroxyl group-containing polymers.

These antistatic agents each have their own characteristics. For example, low-molecular-weight organic compound-based antistatic agents are characterized in that the antistatic performance tends to be substantially affected by the environmental humidity and that the agents tend to bleed out to the outermost layer. The bleed-out of an antistatic agent may cause a decrease in the electrostatic adsorptive force of the thermoplastic resin film or the dielectric film. In addition, an antistatic agent that has bled out may transfer to the surface of another film so that antistatic performance is expressed in the other film, and as a result, it may not be possible to obtain a support layer (A) having stable electrostatic adsorptive force.

Conductive inorganic fillers do not come into contact with one another when added in small amounts, so the resulting antistatic effect may be insufficient. In addition, when conductive inorganic fillers are added in amounts that allow the fillers to come into contact with one another, the amount of a binder is dramatically reduced, which may cause a decrease in the cohesive force of the coating layer (C), a decrease in the adhesive force to the thermoplastic resin film, or a decrease in the surface strength of the protective layer (B).

Electron conductive polymers are typically colored black, green, or bluish gray due to coloring derived from the conjugated system, and when used, an excellent antistatic effect is achieved, but a dull-colored support layer (A) or protective layer (B) may be formed, which is not suitable for bulletin applications of printed matter.

Polymers having an antistatic function have stable antistatic performance, low transferability to the surfaces of other films, and practically no coloring and are therefore preferable as antistatic agents for forming the coating layer (C) used in the electrostatic adsorbable sheet of the present invention. Of these, quaternary ammonium salt-type copolymers or alkali metal salt-containing polymers have good antistatic performance, and the effect of environmental humidity on the antistatic performance is small, which is more preferable.

The coating layer (C) may also contain a polymer binder as necessary. The polymer binder can provide good adhesion between the coating layer (C) and the thermoplastic resin film or the dielectric film on which the coating layer (C) is provided due to the cohesive force of the polymer binder. In addition, when two or more thermoplastic resin films are attached to one another to form a support layer (A), it is possible to enhance the adhesion with the adhesive agent used for attachment.

Examples of polymer binders include radical polymerization-type polymers, condensation polymers, and natural polymers.

Specific examples of radical polymerization-type polymers include (meth)acrylic acid ester-based polymers such as acrylic acid ester copolymers, methacrylic acid ester copolymers, acrylic acid amide-acrylic acid ester copolymers, acrylic acid amide-acrylic acid ester-methacrylic acid ester copolymers, and oxazoline group-containing acrylic acid ester-based polymers; polyacrylamide derivatives; polyvinylpyrrolidone, vinyl acetate-based resins such as vinyl acetate and ethylene-vinyl acetate copolymers; vinyl chloride-based resins such as vinyl chloride, vinyl chloride-vinyl acetate copolymer resins, vinylidene chloride resins, vinyl chloride-vinylidene chloride copolymer resins; halogenated polyolefins such as chlorinated ethylene resins and chlorinated propylene resins; acrylonitrile-butadiene-styrene copolymers, styrene-acryl copolymer resins, styrene-butadiene copolymer resins, acrylonitrile-butadiene copolymers and the like; and butyral resins.

Specific examples of condensation polymers include polyethyleneimine-based polymers such as polyethyleneimine, alkyl-modified polyethyleneimine having from 1 to 12 carbon atoms, poly(ethyleneimine-urea), ethyleneimine adducts of poly(ethyleneimine-urea), polyaminepolyamide, ethyleneimine adducts of polyaminepolyamide, and epichlorohydrin adducts and the like of polyaminepolyamide; polyalkylene glycols such as polyethylene glycol; urethane resins; polyether resins; polyester resins; urea resins; and silicone resins and the like.

Specific examples of natural polymers include terpene resins; petroleum resins; and cellulose-based resins such as cellulose acetate resins and nitrocellulose resins and the like.

Any one type of these polymer binders may be used alone, or two or more types may be mixed and used. These polymer binders can be used in a form in which they are diluted or dispersed in an organic solvent or water. Of these, polyethyleneimine polymers; urethane resins such as polyether urethane, polyester urethane, and acrylic urethane; or (meth)acrylic acid ester copolymers are preferable in that they have good compatibility with the aforementioned polymers having an antistatic function, and are stable and easy to apply when mixed to form a coating.

Pigment particles may also be added to the coating layer (C) as necessary. By adding pigment particles, it is possible to improve the performance such as blocking prevention by providing irregularities on the surface of the layer, or to impart performance such as light resistance or weather resistance as an ultraviolet reflective material. These are selected appropriately and used out of consideration of the desired performance, and the coating layer (C) may or may not contain pigment particles.

Known organic or inorganic fine particles may be used as pigment particles. As specific examples, silicon oxide, calcium carbonate, calcined clay, titanium oxide, zinc oxide, barium sulfate, diatomaceous earth, acrylic particles, styrene particles, polyethylene particles, polypropylene particles, and the like can be used. The particle size of the pigment particles is preferably at most 20 $\mu$m, more preferably at most 15 $\mu$m, and even more preferably at most 3 $\mu$m. When the particle size of the pigment particles exceeds 20 $\mu$m, the pigment particles tend to fall off the coating layer (C) that is formed, resulting in a chalky phenomenon. The pigment particle content in the coating layer (C) is preferably from 0 to 70 mass%, more preferably from 0 to 60 mass%, and even more preferably from 0 to 50 mass%. When the content of the pigment particles exceeds 70 mass%, the amount of the binder resin becomes relatively insufficient, and the cohesive force of the coating layer (C) is insufficient. The adhesive force to the thermoplastic resin film is diminished so that the films may peel off when thermoplastic resin films are attached to one another, and the surface strength of the protective layer (B) may decrease and cause a chalky phenomenon due to the dropping off the pigment particles.

The coating layer (C) can be provided as a coated layer by preparing a coating solution containing the components described above, applying the solution to the thermoplastic resin film or the dielectric film, and then drying and solidifying the substance. Conventionally known techniques and devices can be used for coating.

In addition, the coating layer (C) can also be provided on the thermoplastic resin film or the dielectric film by lamination. In this case, another film on which the coating layer (C) is provided is prepared in advance, and this may be laminated on the thermoplastic resin film or the dielectric film. Lamination can be performed by a technique such as ordinary dry lamination or melt-extrusion lamination.

The formation of the coating layer (C) on the thermoplastic resin film or the dielectric film is preferably performed before the charging treatment described later is performed. Due to the antistatic performance of the coating layer (C), the electrostatic adsorptive force of the support layer (A) or the protective layer (B) is suppressed, even after charging treatment, which makes the layers easy to handle.

The coating layer (C) imparts antistatic performance to one surface of the thermoplastic resin film or the dielectric film. Specifically, the surface resistivity of the coating layer (C) is adjusted to within a range of from $1 \times 10^{-1}$ to $9 \times 10^{12}$ $\Omega$, preferably from $1 \times 10^{3}$ to $9 \times 10^{11}$ $\Omega$, and even more preferably from $1 \times 10^{6}$ to $9 \times 10^{10}$ $\Omega$.

When the surface resistivity of the coating layer (C) exceeds $9 \times 10^{12}$ $\Omega$, the electrostatic adsorptive force of the electrostatic adsorbable laminate or the electrostatic adsorbable sheet cannot be sufficiently suppressed. This tends to cause troubles such as sticking to rolls or the sticking of sheets to one another in the attachment process of electrostatic adsorbable laminates, which tends to cause troubles such as the sticking of electrostatic adsorbable sheets to one another. On the other hand, it is technically difficult to form a coating layer (C) having a high conductivity so that the surface resistivity is lower than $1 \times 10^{-1}$ $\Omega$, and even if it could be formed, there is a risk that the total light transmittance of the support layer (A) may decrease and that the visibility of the print pattern attached to the support layer (A) may become poor. In addition, there is also a risk that the electrostatic adsorptive force of the support layer (A) may be lost.

The thickness of the coating layer (C) is preferably from 0.01 to 50 $\mu$m, more preferably from 0.05 to 30 $\mu$m, even more preferably from 0.1 to 10 $\mu$m, and particularly preferably from 0.3 to 8 $\mu$m. When the thickness is less than

0.01 μm, it is difficult to maintain the uniformity of the coating layer (C), and it may not be possible to achieve stable antistatic performance. On the other hand, when the thickness exceeds 50 μm, the electrostatic adsorptive force or the light transmittance of the support layer (A) tends to be lost when the coating layer (C) is provided on a thermoplastic resin film. Moreover, the support layer (A) becomes heavy so that its own weight cannot be supported by the electrostatic adsorptive force thereof, which tends to cause the layer to peel off, and there is a possibility that the electrostatic adsorptive force between the support layer (A) and the protective layer (B) may be easily diminished.

[Charging treatment]

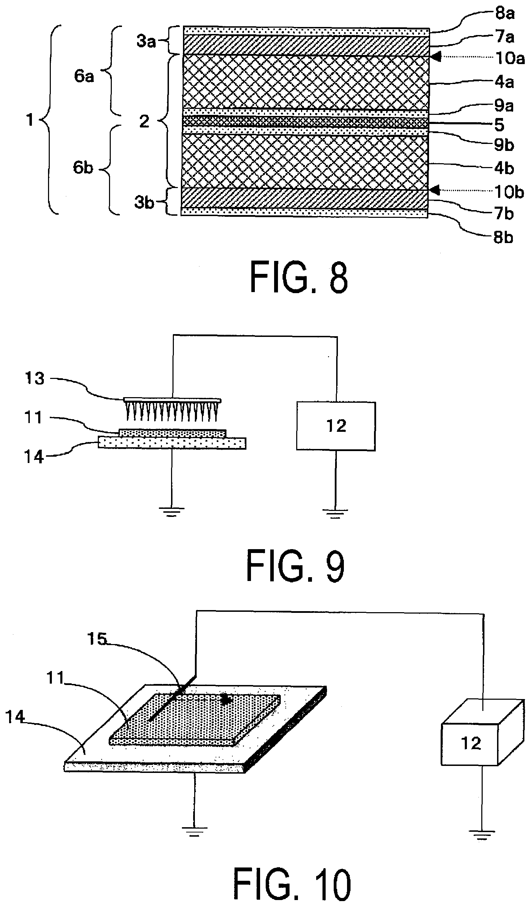

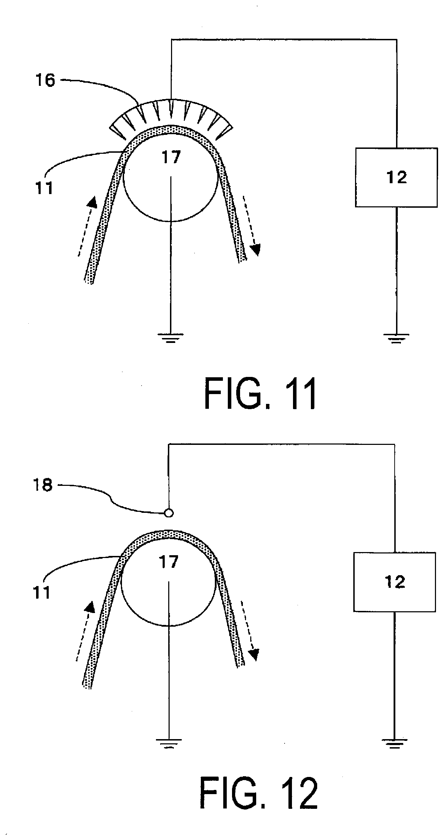

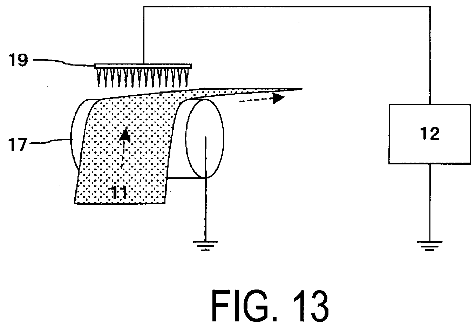

The electrostatic adsorbable sheet of the present invention is a laminate of (B)/(A)/(B) laminated by performing charging treatment on at least one of the thermoplastic resin film surface of the support layer (A) and the dielectric film surface of the protective layer (B) and then attaching the two layers by means of the electrostatic adsorptive force thereof.
In addition, the electrostatic adsorbable sheet of the present invention may also be produced as a laminate of (B)/(A)/(B) by performing charging treatment on at least one of the thermoplastic resin film surface of the support layer (A) and the dielectric film surface of the protective layer (B), bringing the thermoplastic resin film surface and the dielectric film surface into contact so as to first produce an electrostatically adsorbed electrostatic adsorbable laminate, and then attaching the thermoplastic resin films of one set of electrostatic adsorbable laminates to one another with an adhesive agent.
Charging treatment is performed in order to give the thermoplastic resin film or the dielectric film electrostatic adsorptive force by infusing a charge into the thermoplastic resin film or the dielectric film.
Charging treatment can be performed in accordance with various known methods. Examples of treatment methods include a method of forming the film and then applying corona discharge or a pulsing high voltage to the surface of the film (electro-electret method), a method of holding both surfaces of the film with a dielectric and applying a DC high voltage to both surfaces (electro-electret method), and an electret method performed by irradiating the film with ionizing radiation such as γ-rays or electron beams (radio-electret method).
The charging treatment on the film is preferably performed by the aforementioned method of applying corona discharge or a high voltage (electro-electret method). Preferable examples of electro-electret methods include a method of fixing the film between an application electrode connected to a DC high-voltage power supply and a ground electrode and applying a voltage thereto (batch method; see FIGS. 9 and 10), and a method of applying a voltage so as to pass through the film between an application electrode connected to a DC high-voltage power supply and a ground electrode (continuous method; see FIGS. 11 to 13). When these techniques are used, it is preferable to use needle-shaped application electrodes 13, 16, 19, and 25 having multiple needle-shaped materials disposed at equal intervals or metal wires (wire-shaped application electrodes) 15 and 18 for the main electrode (application electrode) and to use a flat metal plate (plate-shaped ground electrode) 14 or metal rolls (roll-shaped ground electrodes) 17 and 26 as a counter electrode.
When a coating layer (C) is provided on one surface of the thermoplastic resin film or one surface has antistatic performance, as in the case of the protective layer (B), charging treatment such as corona discharge performed on the surface is not effective since there is a high likelihood that the applied charge will be scattered to the periphery and lost. When the surface having antistatic performance is in contact with the ground side (metal plate 14 or metal rolls 17 and 26), such a problem does not occur in particular.
The support layer (A) or the protective layer (B) constituting the electrostatic adsorbable sheet may also be subjected to discharging treatment after charging treatment. Performing discharging treatment makes it possible to avoid troubles in processing steps such as the cutting step or the printing step and the like by eliminating excessive charging. A known technique utilizing a voltage application-type static eliminator (ionizer), a self-discharge type static eliminator, or the like can be used for this discharging treatment. These typical static eliminator are capable of removing a charge on the surface but are unable to remove a charge accumulated inside the thermoplastic resin film or the dielectric film. Therefore, the electrostatic adsorptive force of the support layer (A) is not substantially diminished by the discharging treatment.

[Electrostatic adsorbable laminate]

The electrostatic adsorbable sheet described above may be produced by laminating a thermoplastic resin film and a protective layer (B) by means of electrostatic adsorption to form an electrostatic adsorbable laminate and then attaching two of these laminates via an adhesive agent.
The electrostatic adsorbable laminate is obtained by performing charging treatment on the surface having no antistatic performance (surface resistivity: from $1 \times 10^{13}$ to $9 \times 10^{17}$ $\Omega$) of the thermoplastic resin film constituting the laminate and then laminating the dielectric film surface of the protective layer (B) on this surface by means of electrostatic adsorption, or by performing charging treatment on the dielectric film surface of the protective layer (B) and then laminating the surface of the thermoplastic resin film having no antistatic performance on this surface by means of electrostatic adsorption.

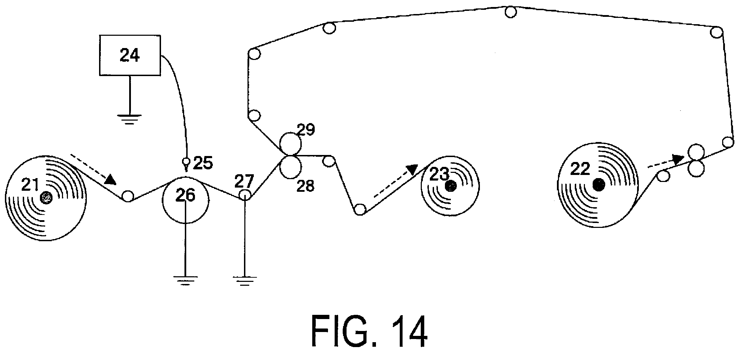

As illustrated in FIG. 14, for example, electrostatic adsorbable laminates can be obtained by forming the thermoplastic resin film into a long roll (rewinded product) 21, performing charging treatment by passing the film between electrodes 25 and 26 while unrolling the film, unrolling a protective layer (B) formed separately as a long roll (rewinded product) 22, and then pressure bonding the two with a pressure roll 29.

In addition, by using two sets of a charge infusing device and the miscellaneous equipment thereof in FIG. 14, it is possible to produce an electrostatic adsorbable laminate having a protective layer (B)/support layer (A)/protective layer (B) structure in one pass. Specifically, an electrostatic adsorbable laminate is obtained by laminating a protective layer (B) on one surface of the support layer (A) after a first stage of charge infusion and then laminating a protective layer (B) on the surface of the support layer (A) of the laminate after a second stage of charge infusion. At this time, the first and/or second stages of charge infusion may be performed on the surfaces of the protective layers (B) rather than the surface of the support layer (A). In addition, the lamination of the support layer (A) and the protective layers (B) may also be performed sequentially or simultaneously. There is no limitation on modifications to the production method for the electrostatic adsorbable laminate within a scope that does not depart from the present invention.

[Adhesive agent]

When an electrostatic adsorbable sheet is obtained by adhering two electrostatic adsorbable laminates, an adhesive agent is used to adhere the electrostatic adsorbable laminates to one another.

A water-based adhesive agent, a solvent-based adhesive agent, a hot melt-type adhesive agent, or the like may be used as an adhesive agent. These adhesive agents are provided on the thermoplastic resin film surface of one of the electrostatic adsorbable laminates by a technique such as coating, spraying, or melt extrusion lamination, and the two films can be adhered by an ordinary method such as performing wet lamination, dry lamination, or melt extrusion lamination on the thermoplastic resin film surface of the other electrostatic adsorbable laminate. Alternatively, the thermoplastic resin films can be adhered to one another via a heat-fusible film.

Of these techniques, a dry lamination method is preferable in that the adhesive strength between the thermoplastic resin films is excellent and the transparency of the resulting support layer (A) is excellent.

An example of an adhesive agent when dry lamination is performed is a solution-type or emulsion-type liquid adhesive agent which has fluidity and can be coated. The liquid adhesive agent is prepared by dissolving, dispersing, emulsifying and dispersing, or diluting a resin component selected from the group consisting of ether resins, ester resins, urethane resins, urea resins, acrylic resins, amide resins, epoxy resins, and the like in a phase of a conventionally known solvent to be used.

Examples of ether resins include polyether polyols obtained by polymerizing an oxirane compound such as ethylene oxide, propylene oxide, butylene oxide, tetrahydrofuran and the like using a low-molecular-weight polyol such as ethylene glycol, propylene glycol, glycerin, trimethylolpropane, bisphenol A and the like as an initiator. More specific examples include polyethylene glycol, polypropylene glycol, polytetramethylene glycol and the like.

Examples of ester resins include dehydration reaction products of polybasic acids and polyhydric alcohols. Examples of polybasic acids include phthalic anhydride, isophthalic acid, terephthalic acid, glutaric acid, adipic acid, pimelic acid, suberic acid, azelaic acid, sebacic acid, hexahydrophthalic anhydride and the like. Dimethyl isophthalate esters and dimethyl terephthalate esters, which are derivatives of these acids, may also be used as polybasic acids. Examples of polyhydric alcohols include ethylene glycol, diethylene glycol, triethylene glycol, trimethylolpropane, propylene glycol, dipropylene glycol, 1,6-hexanediol, neopentyl glycol, hydrogenated bisphenol A, 1,4-butanediol, 1,4-cyclohexanedimethanol, 2,2,4-trimethylpentane-1,3-diol, polyethylene glycol and the like. The ester resin is obtained by using one type or two or more types of the polybasic acids described above and one type or two or more types of the polyhydric alcohols described above and subjecting them to dehydration polymerization.

Examples of urethane resins include condensates of an isocyanate compound and at least one type of the aforementioned polyhydric alcohols, ether resins, and ester resins. Examples of isocyanate compounds include aliphatic isocyanates such as hexamethylene diisocyanate, 2,4-diisocyanate-1-1-methylcyclohexane, diisocyanate cyclobutane, tetramethylene diisocyanate, hydrogenated xylylene diisocyanate, dicyclohexylmethane diisocyanate, dimethyldicyclohexylmethane diisocyanate, lysine diisocyanate, cyclohexane diisocyanate, dodecane diisocyanate, tetramethylxylene diisocyanate, isophorone diisocyanate and the like; aromatic isocyanates such as tolylene-2,4-diisocyanate, tolylene-2,6-diisocyanate, diphenylmethane-4,4'-diisocyanate, 3-methyldiphenylmethane-4,4'-diisocyanate, m- or p-phenylene diisocyanate, o-, m-, or p-xylylene diisocyanate, chlorophenylene-2,4-diisocyanate, naphthalene-1,5-diisocyanate, diphenyl-4,4'-diisocyanate, 3,3'-dimethyldiphenyl-1,3,5-triisopropylbenzene-2,4-diisocyanate, carbodiimide-modified diphenylmethane diisocyanate, polymethylene polyphenyl polyisocyanate and the like; and isocyanate monomers such as diphenyl ether diisocyanate and the like. In order to further increase the molecular weight of the urethane resin and provide various properties such as adhesive force or stability, a polyisocyanate compound modified with a polyhydric alcohol may also be used.

Examples of urea resins include condensates of the aforementioned isocyanate compounds and amine compounds. Examples of amine compounds include aliphatic amines such as ethylenediamine, 1,2-propylenediamine, 1,3-propylenediamine, 1,4-butanediamine, hexamethylenediamine, diethylenetriamine, triethylenetetramine, tetraethylenepentamine and the like; alicyclic amines such as isophoronediamine, dicyclohexylmethanediamine, methylcyclohexanediamine, isopropylidene-bis-4-cyclohexyldiamine, 1,4-cyclohexanediamine and the like; and heterocyclic amines such as piperazine, methylpiperazine, aminoethylpiperazine and the like.

Examples of acrylic resins include resins obtained by polymerizing acrylic compounds using an organic peroxide as a polymerization initiator. Examples of acrylic compounds include (meth)acrylic acid, methyl (meth)acrylate, ethyl (meth)acrylate, n-propyl (meth)acrylate, n-butyl (meth)acrylate, t-butyl (meth)acrylate, cyclohexyl (meth)acrylate, 2-ethylhexyl (meth)acrylate, lauryl (meth)acrylate, tridecyl (meth)acrylate, stearyl (meth)acrylate, 2-hydroxyethyl (meth)acrylate, 2-hydroxypropyl (meth)acrylate, (meth)acrylonitrile, (meth)acrylamide, glycidyl (meth)acrylate and the like. These acrylic resins may be used alone, or two or more types may be used for polymerization.

Examples of amide resins include condensates of the aforementioned polybasic acids and the aforementioned amine compounds.

Examples of epoxy resins include homocondensation reaction products of a polyglycidyl ether obtained by reacting a polyhydric phenol and at least one of epihalohydrin and a low-molecular-weight epoxy compound, and condensates obtained by a condensation reaction of a polyhydric phenol and the aforementioned ether resins, ester resins, urethane resins, urea resins, acrylic resins, and amide resins.

Specific examples of polyhydric phenols include bisphenols such as bisphenol A (2,2-bis(4-hydroxyphenyl)propane), bisphenol B (2,2-bis(4-hydroxyphenyl)butane), bisphenol E (2,2-bis(4-hydroxyphenyl)ethane), bisphenol S (2,2-bis(4-hydroxyphenyl)sulfone), 2,2-bis(4-hydroxyphenyl)-4-methylpentane, 1,1-bis(4-hydroxyphenyl)-2-methylpropane, bis(4-hydroxyphenyl)phenylmethane, 2,2-bis(4-hydroxy-3,5-dimethylphenyl)methane, 2,2-bis(4-hydroxy-3,5-dimethylphenyl)ethane, 2,2-bis(4-hydroxy-3,5-dimethylphenyl)propane, 2,2-bis(4-hydroxy-3,5-dimethylphenyl)butane, 2,2-bis(4-hydroxy-3-methylphenyl)butane, 2,2-bis(4-hydroxy-3-methylphenyl)-2-phenylethane, bisphenol, bis(4-hydroxyphenyl)ether, bis(4-hydroxyphenyl)ketone and the like.

The coating of these adhesive layers is performed with a die coater, a bar coater, a comma coater, a lip coater, a roll coaster, a rod coater, a curtain coater, a gravure coater, a spray coater, a blade coater, a reverse coater, an air knife coater, a slide hopper, or the like. Smoothing is then performed as necessary, and the adhesive layer is formed via a drying step.

An electrostatic adsorbable sheet can be obtained by applying the aforementioned adhesive agent to the thermoplastic resin film surface of one of the electrostatic adsorbable laminates with the coating method described above and drying to form an adhesive layer, and then laminating the adhesive layer and the thermoplastic resin film surface of the other electrostatic adsorbable laminate and pressure-bonding the surfaces with a pressure roll (nip roll).

The thickness of the adhesive layer when the adhesive agent is provided by means of coating is preferably from 0.1 to 100 $\mu$m, more preferably from 0.2 to 50 $\mu$m, and even more preferably from 0.5 to 25 $\mu$m after drying. When the thickness of the adhesive layer is at least 0.1 $\mu$m, locations where the adhesive agent is partially absent due to coating unevenness are not generated, and a uniform layer with a sufficient adhesive force is obtained. On the other hand, when the thickness is at most 100 $\mu$m, the decrease in light transmittance due to the adhesive layer is small, and the visibility is excellent when the printed matter or the like is viewed via the support layer (A).

In addition, when an electrostatic adsorbable sheet is obtained by a melt extrusion lamination technique using a hot melt-type adhesive agent, the sheet is obtained by extruding a hot melt-type adhesive agent described below from a die into a molten film shape and laminating the film on the thermoplastic resin film surface of one of the electrostatic adsorbable laminates, and then laminating the molten film and the thermoplastic resin film surface of the other electrostatic adsorbable laminate and pressure-bonding the surfaces with a pressure roll.

Examples of hot melt-type adhesive agents when melt extrusion lamination is performed include polyolefin-based resins such as low-density polyethylene, ethylene/vinyl acetate copolymers and the like; metal salts of ethylene/(meth)acrylic acid copolymers (for example, Surlyn(registered trademark)); halogenated polyolefin-based resins such as chlorinated polyethylene and chlorinated polypropylene; polyamide-based resins; polybutyral-based resins; urethane-based resins and the like.

[Printing]

The electrostatic adsorbable sheet of the present invention can be printed on the surface (outer surface) of the protective layer (B) on the side not in contact with the support layer (A). A conventionally known technique such as offset printing, gravure printing, flexographic printing, letter press printing, screen printing, inkjet printing, thermosensitive recording printing, thermal transfer printing, electrophotographic printing and the like may be used for this printing, but offset printing and inkjet printing are preferable in that it is easy to change the design or size. Furthermore, oil-based ink, water-based ink, and UV ink can be used as the printing ink, but it is preferable to use UV ink, which has a fast drying rate.

In addition, printing may also be performed on the support layer (A) itself constituting the electrostatic adsorbable sheet or the surface (inner surface) of the protective layer (B) on the side in contact with the support layer (A) within a range that does not diminish the effect of the present invention. This printing is preferably performed prior to charging treatment or performed on an electrostatic adsorbable sheet obtained by lamination.

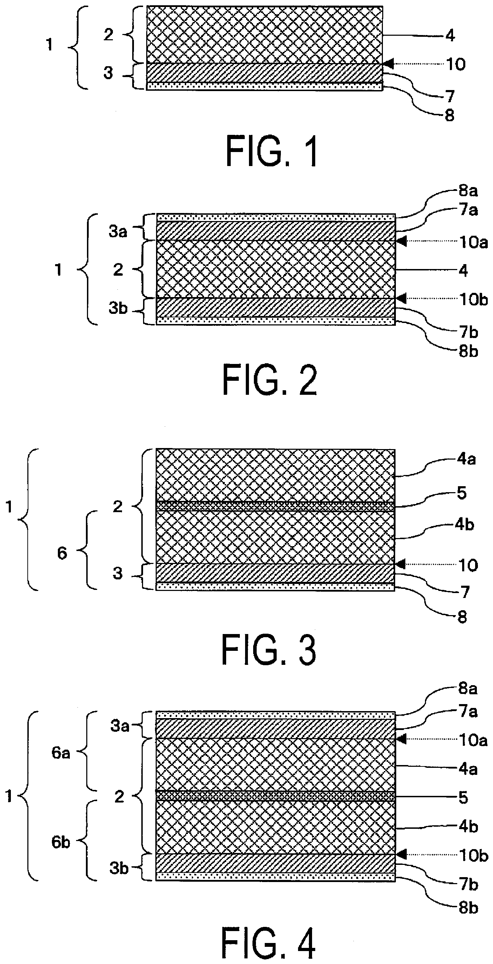

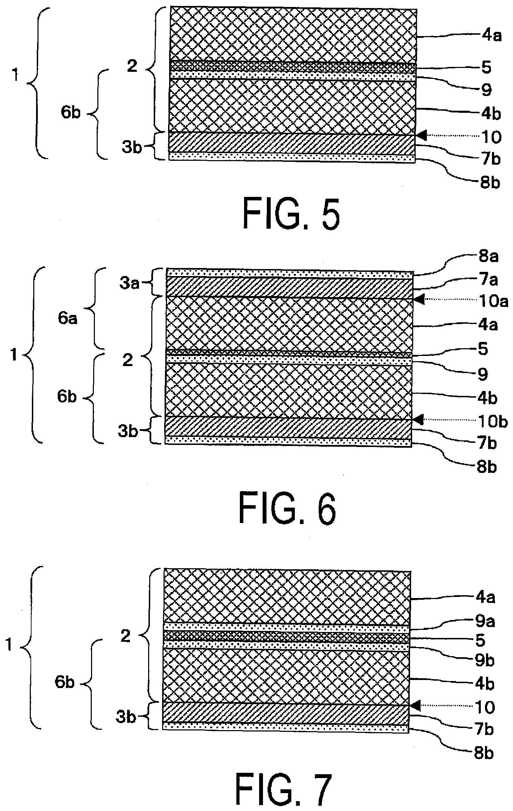

Examples of the structure of the electrostatic adsorbable sheet of the present invention include the structures illustrated in FIGS. 2, 4, 6 and 8 (Figures 1, 3, 5 and 7 do not belong to the invention). Specifically, examples include an electrostatic adsorbable sheet 1 in which a protective layer (B) 3 having a coating layer (C) 8 is laminated on one surface of a support layer (A) 2 by means of adsorption by an electrostatic adsorbable surface 10 (FIG. 1); an electrostatic adsorbable sheet 1 in which protective layers (B) 3a and 3b having coating layers (C) 8a and 8b are laminated on both surfaces of a support layer (A) 2 by means of adsorption by electrostatic adsorbable surfaces 10a and 10b (FIG. 2); an electrostatic adsorbable sheet 1 in which two thermoplastic resin films 4a and 4b are attached via an adhesive agent 5 to form a support layer (A) 2 (FIG. 3); an electrostatic adsorbable sheet 1 in which two sets of electrostatic adsorbable sheets illustrated in FIG. 1 are attached via an adhesive agent 5 (FIG. 4); an electrostatic adsorbable sheet 1 in which a coating layer (C) 9 is provided between the thermoplastic resin film 4b and the adhesive agent 5 in FIG. 3 (FIG. 5); an electrostatic adsorbable sheet 1 in which a protective layer (B) 3a having a coating layer (C) 8a on one surface is laminated on the thermoplastic resin film surface of an electrostatic adsorbable sheet by means of adsorption by an electrostatic adsorbable surface 10a in FIG. 5 (FIG. 6); an electrostatic adsorbable sheet 1 in which a protective layer (B) 3b having a coating layer 8b is laminated, by means of adsorption by an electrostatic adsorbable surface 10, on one surface of a support layer (A) 2 obtained by attaching the sides of coating layers (C) 9a and 9b of two sets of thermoplastic resin films 4a and 4b having a coating layer (C) on one surface to one another via an adhesive agent 5 (FIG. 7); and an electrostatic adsorbable sheet 1 in which a protective layer (B) 3a having a coating layer 8a is laminated on a thermoplastic resin film surface 4a of the electrostatic adsorbable sheet by means of adsorption by an electrostatic adsorbable surface 10a in FIG. 7 (FIG. 8).

[Electrostatic adsorbable sheet]

When one given surface of a support (A) obtained by peeling the entire protective layer (B) from the electrostatic adsorbable sheet is defined as the front side and the other surface is defined as the back side, a product of a surface potential (kV) on the front side and a surface potential (kV) on the back side measured by a method described below is preferably a negative value. The thermoplastic resin film contained in the support (A) is itself an insulating film. This is because when a charge accumulates due to charging treatment performed on one surface, a charge of a different polarity accumulates on the surface of the opposite side due to the dielectric effect, and this does not change even when the support (A) has a laminated structure. From the perspective of electrostatic adsorptive force, the product is more preferably from -0.07 to -4.00 (kV$^2$), even more preferably from -0.30 to -3.00 (kV$^2$), and particularly preferably from -0.60 to -2.00 (kV$^2$). When the product of the surface potentials is at most -0.07 (kV$^2$), the target electrostatic adsorptive force of the present invention is easy to achieve. On the other hand, it is technically difficult to obtain a support (A) having a product of less than -4.00 (kV$^2$).

[Display object]

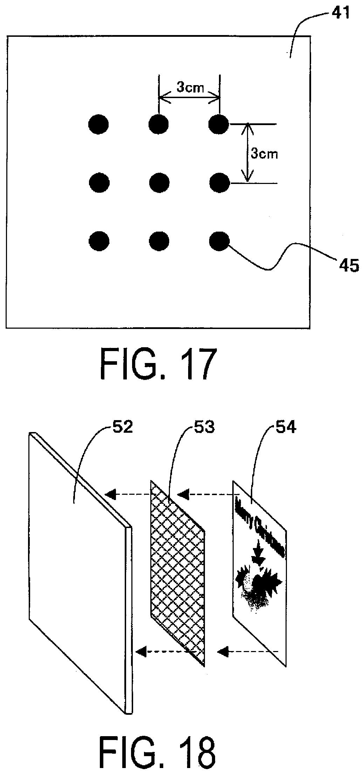

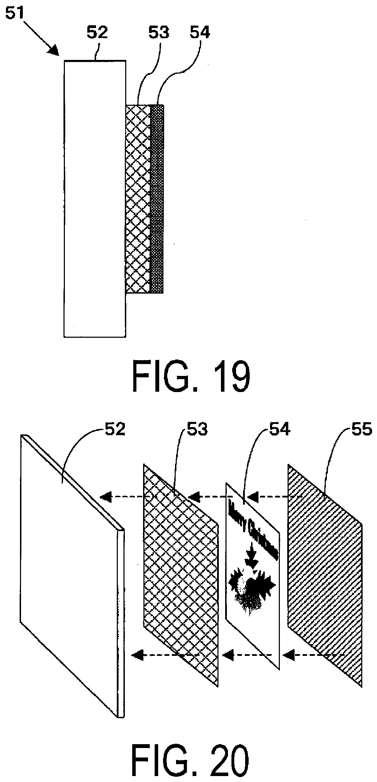

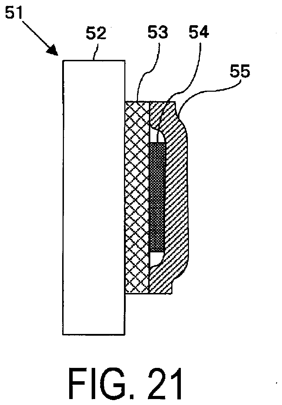

As illustrated in FIGS. 18 to 21, the support layer (A) of the electrostatic adsorbable sheet of the present invention can be used as a display object such as a seal, a label, a sign, a poster, or an advertisement by attaching printed matter to one surface thereof. The display object can be attached to an adherend by the electrostatic adsorptive force without using a pressure-sensitive adhesive or the like, which yields the advantage that air remaining is unlikely to occur. In addition, the display object has high electrostatic adsorptive force when used, and the persistence of the electrostatic adsorptive force is also sufficient, so the display object can be displayed and used on the adherend for a long period of time and can be easily peeled after use so that the printed matter and the support layer (A) can be separated.

In addition, when printing is performed on the surface of the protective layer (B), the electrostatic adsorptive force also remains on the protective layer (B) that is peeled off at the time of the use of the support layer (A), so it can also be used separately as a display object.

Examples of display objects include POP cards (posters, stickers, displays, or the like), shop guides (pamphlets, company guides, lists of goods, menus, or the like), mats (lunch mats, table mats, stationary, or the like), manuals (various manuals for duty assignment, work, operation, or the like, process sheets, time schedules, or the like), charts (marine charts, weather maps, graphic charts, ruled charts, or the like), catalogs, maps (marine charts, route maps, maps for outdoors, or the like), shop price lists, mountain climbing guides, cooking recipes, guide boards (floor guides, direction/destination guides, or the like), schedule tables, road signs (for funerals/housing exhibition locations, or the like), room identification cards, school record tables, signboards (keep out, forest road construction, or the like) compartment piles, door plates, calendars (with images), mouse pads, packaging materials (packaging paper, boxes, bags, or the like), coasters and the like, and the sheet is applicable to any of these display objects. In particular, the display objects are suitably used in applications presupposing indoor use.

Examples

[Evaluation methods]

(Thickness)

The thickness in the present invention was measured using a Constant Pressured Thickness Measurement Instrument (trade name PG-01J, produced by TECLOCK Corp.) in accordance with JIS K-7130.

When the thermoplastic resin film that was formed had a multilayer structure, the thickness of each of the layers was determined as follows: samples for cross-sectional measurement were created by cooling measurement samples to a temperature not greater than -60°C using liquid nitrogen and then placing them on a glass plate, and cutting at a perpendicular using a razor blade (trade name Proline Blade, produced by Schick Japan K.K.). The obtained samples were observed at the cross-section using a scanning electron microscope (trade name JSM-6490, produced by JEOL, Ltd.), and the boundary lines between each thermoplastic resin composition were distinguished by from the compositional appearance. Subsequently, the thicknesses of each layer was determined by multiplying the thickness of the entire thermoplastic resin film and the above observed layer thickness ratio.

(Surface resistivity)

The surface resistivity in the present invention was measured using electrodes of the double-ring method in accordance with JIS-K-6911 when the surface resistivity was $1 \times 10^7$ $\Omega$ or higher under conditions at a temperature of 23°C and relative humidity of 50%. When the surface resistivity was less than $1 \times 10^7$ $\Omega$, the surface resistivity was measured with a four-point probe in accordance with JIS-K-7194.

(Specific dielectric constant)

The specific dielectric constant of the dielectric film in the present invention was determined by using a "4192A LF IMPEDANCE ANALYZER" produced by Agilent Technologies, sandwiching a sample larger than the electrode diameter between a main electrode having a diameter of 38 mm and a counter electrode having a diameter of 56 mm so that a surface having a high surface resistivity faces the main electrode side under conditions at a temperature of 23°C and relative humidity of 50%, applying a voltage of 5 V, taking a measurement at a frequency within a range of from 10 Hz to 1 MHz, and taking a measured value at a frequency of 100 Hz as a representative value.

(Total light transmittance)

The total light transmittance of the support layer (A) of the present invention was measured under conditions at a temperature of 23°C and relative humidity of 50% in accordance with JIS-K-7105. A "Haze Meter NDH 2000" produced by NIPPON DENSHOKU CO., LTD. was used for the measurement of the total light transmittance.

(Surface potential)

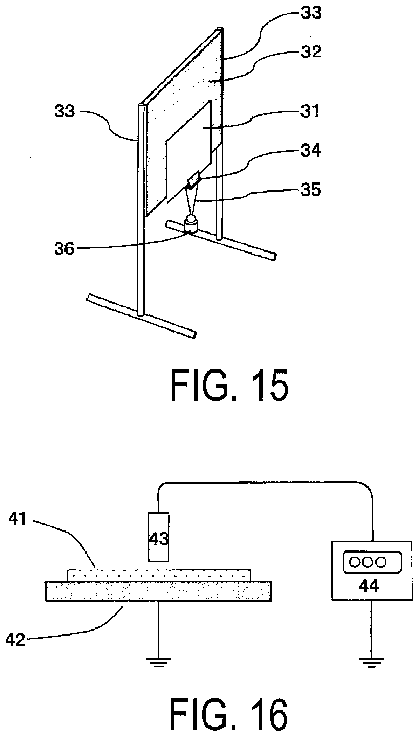

The surface potential of the support layer (A) obtained by removing the entire protective layer (B) from the electrostatic adsorbable sheet of the present invention was measured by performing state adjustment for at least 24 hours under conditions at a temperature of 23°C and relative humidity of 50% on an electrostatic adsorbable sheet cut to a size of 15 cm x 15 cm, peeling the protective layer (B) from the support layer (A), placing a support layer (A) 41 on a metal plate 42 to which a ground is mounted, as illustrated in FIG. 16, using a surface potentiometer 43 (Model 370, produced by TREK Japan K.K.) and installing the device so that the distance between the support layer (A) 41 and the surface potentiometer 43 is 2 mm, and taking a measurement with a measurement instrument 44.

After one given surface (notated as the front surface) was measured in the measurement of the surface potential, the same sample was reversed from front to back and placed on the metal plate, and a measurement was taken for the other surface (notated as the back surface). Here, an average value of measurements taken at nine measurement locations 45 was used, as illustrated in FIG. 17.

The present invention will be described in further detail below using preparation examples, production examples, working examples, comparative examples, and test examples.

The materials, used amounts, proportions, operations, and the like described below may be varied as appropriate provided that they do not deviate from the spirit of the present invention.

Therefore, the scope of the present invention is not limited by the specific examples given below.

[Preparation examples]

The respective components constituting the coating layers (C) used in the following working examples and comparative examples were prepared and obtained in accordance with the following procedures.

[Preparation example of polymer (i) having antistatic function]

First, 100 parts by mass of polyethylene glycol monomethacrylate (manufactured by NOF Corporation, trade name: BLEMMER-PE-350), 20 parts by mass of lithium perchlorate (manufactured by Wako Pure Chemical Industries, Ltd., reagent), 1 part by mass of hydroquinone (manufactured by Wako Pure Chemical Industries, Ltd., reagent), and 400 parts by mass of propylene glycol monoethyl ether (manufactured by Wako Pure Chemical Industries, Ltd., reagent) were introduced into a four-neck flask fitted with a stirring device, a reflux condenser, a thermometer, and a dropping funnel, and the inside of the system was subjected to nitrogen exchange and reacted for 40 hours at 60°C. Next, 5 parts by mass of stearyl methacrylate (manufactured by Wako Pure Chemical Industries, Ltd., reagent), 5 parts by mass of n-butyl methacrylate (manufactured by Wako Pure Chemical Industries, Ltd., reagent), and 1 part by mass of 2,2'-azobis(isobutyronitrile) (manufactured by Wako Pure Chemical Industries, Ltd., reagent) were added to the reaction product and subjected to a polymerization reaction for three hours at 80°C. The solid content was then adjusted to 20 mass% by adding propylene glycol monoethyl ether to obtain a solution of a polymer (i) having an antistatic function comprising an alkali metal salt-containing polymer having a mass average molecular weight of approximately 300,000 and a lithium concentration of 0.6 mass% in the solid content.

[Preparation example of polymer (ii) having antistatic function]

First, 35 parts by mass of N,N-dimethylaminoethyl methacrylate (manufactured by Mitsubishi Gas Chemical Co., Inc.), 20 parts by mass of ethyl methacrylate (manufactured by Wako Pure Chemical Industries, Ltd., reagent), 20 parts by mass of cyclohexyl methacrylate (manufactured by Wako Pure Chemical Industries, Ltd., reagent), 25 parts by mass of stearyl methacrylate (manufactured by Wako Pure Chemical Industries, Ltd., reagent), 150 parts by mass of ethyl alcohol, and 1 part by mass of 2,2'-azobis(isobutyronitrile) (manufactured by Wako Pure Chemical Industries, Ltd., reagent) were introduced into a four-neck flask fitted with a stirring device, a reflux condenser, a thermometer, and a dropping funnel, and the inside of the system was subjected to nitrogen exchange and then a polymerization reaction for 6 hours at 80°C under a nitrogen air flow. Next, 85 parts by mass of a 50 mass% aqueous solution of 3-chloro-2-hydroxypropyltrimethylammonium chloride (manufactured by Wako Pure Chemical Industries, Ltd., reagent) was added and further reacted for 15 hours at a temperature of 80°C. Ethyl alcohol was then distilled out while dropping water into the solution so as to obtain a solution of a polymer (ii) having an antistatic function comprising quaternary ammonium salt-type copolymer having a final solid content of 20 mass%.

[Preparation example of polymer binder (iii)]

First, 15 parts by mass of 2-hydroxyethyl methacrylate (manufactured by Wako Pure Chemical Industries, Ltd., reagent), 50 parts by mass of methyl methacrylate (manufactured by Wako Pure Chemical Industries, Ltd., reagent), 35 parts by mass of ethyl acrylate (manufactured by Wako Pure Chemical Industries, Ltd., reagent), and 100 parts by mass of toluene (manufactured by Wako Pure Chemical Industries, Ltd., reagent) were charged into a four-neck flask fitted with a stirring device, a reflux condenser, a thermometer, and a dropping funnel. After nitrogen exchange, 0.6 parts by mass of 2,2'-azobis(isobutyronitrile) (manufactured by Wako Pure Chemical Industries, Ltd., reagent) was introduced as an initiator, and polymerization was then performed for four hours at 80°C. The resulting solution was a 50% toluene solution of a hydroxyl group-containing methacrylate ester polymer having a hydroxyl value of 65. Next, 30 parts by mass of a 20% methyl ethyl ketone solution of a vinyl chloride/vinyl acetate copolymer (manufactured by Shin Dai-Ichi Vinyl Corporation, trade name: ZEST C150ML) was added to 100 parts by mass of this solution, and the solid content was adjusted to 20 mass% by adding methyl ethyl ketone (manufactured by Wako Pure Chemical Industries, Ltd., reagent) to obtain a solution of a polymer binder (iii).

[Preparation example of polymer binder (iv)]

First, 100 parts by mass of a 25 mass% aqueous solution of polyethylene imine (manufactured by Nippon Shokubai Co., Ltd., trade name: Epomin P-1000), 10 parts by mass of 1-chlorobutane (manufactured by Wako Pure Chemical Industries, Ltd., reagent), and 10 parts by mass of propylene glycol monomethyl ether (manufactured by Wako Pure Chemical Industries, Ltd., reagent) were introduced into a four-neck flask fitted with a stirring device, a reflux condenser, a thermometer, and a nitrogen gas introducing port and stirred under a nitrogen air flow. A denaturation reaction was performed for 20 hours at a temperature of 80°C, and the solid content was then adjusted to 20 mass% by adding water to the solution to obtain a solution of a polymer binder (iv).

[Preparation example of polymer binder (v)]

An aqueous solution of a commercially available polyamide/epichlorohydrin resin (manufactured by SEIKO PMC Corporation, trade name: WS4024, solid content concentration: 25 mass%) was used as a solution of a polymer binder (v).

The coating solutions constituting the coating layers (C) used in the following working examples and comparative examples were prepared and obtained in accordance with the following procedures.

[Preparation Example 1 of coating solution]

While methyl ethyl ketone was gently stirred in a Kaures mixer at normal temperature, each of the weighed pigment particles listed in Table 1 was added thereto little by little to adjust the solid content concentration to 20 mass%. The content was then stirred for 30 minutes after increasing the revolution speed of the Kaures mixer so as to prepare a pigment dispersion.

Next, the revolution speed of the Kaures mixer was reduced, and the solution of the polymer binder (iii) and the solution of the polymer (i) having an antistatic function described in preparation examples and a solution of a curing agent described in Table 1 (diluted to a solid content of 20 mass% with ethyl acetate) were sequentially added in this order to the pigment dispersion so as to achieve the compounding ratio described in Table 1. After the content was mixed by stirring for 20 minutes in this state, it was filtered through a 100-mesh filter to remove coarse particles. The solution was then diluted to a solid content concentration of 20 mass% by adding methyl ethyl ketone to the solution so as to obtain a coating solution.

[Preparation Example 2 of coating solution]

The solution of the polymer binder (iv), the solution of the polymer binder (v), and the solution of the polymer (ii) having an antistatic function described in the preparation examples were added in this order to a vessel fitted with a stirring device at normal temperature so as to achieve the compounding ratio described in Table 1. The solution was then diluted to a solid content concentration of 3 mass% by adding water, and this was mixed by stirring for 20 minutes in this state to obtain a coating solution.

[Table 1]

Table 1

| Raw materials used | | Coating layer (C) compounding ratio (Solid content conversion/mass%) | |
| --- | --- | --- | --- |
| | | Preparation Example 1 | Preparation Example 2 |
| Polymer having antistatic function | Polymer (i) having antistatic function obtained in preparation example (Alkali metal salt-containing polymer) | 10 | - |
| | Polymer (ii) having antistatic function obtained in preparation example (Quaternary ammonium salt-type copolymer) | - | 20 |

(continued)

| Raw materials used | | Coating layer (C) compounding ratio (Solid content conversion/mass%) | |
| --- | --- | --- | --- |
| | | Preparation Example 1 | Preparation Example 2 |
| Polymer binder | Polymer binder (iii) obtained in preparation example (Acrylic acid ester copolymer) | 42 | - |
| | Polymer binder (iv) obtained in preparation example (Polyethylene imine polymer) | - | 40 |
| | Polymer binder (v) Polyamide/epichlorohydrin resin (manufactured by SEIKO PMC Corporation, trade name: WS4024) | - | 40 |
| Pigment particles | Precipitated silica (manufactured by MIZUSAWA INDUSTRIAL CHEMICALS,LTD. trade name: MIZUKASIL P-527, average particle size: 1.6 $\mu$m, oil 180 cc/100 g) | 15 | - |
| | Surface-treated barium sulfate (manufactured by SAKAI CHEMICAL INDUSTRY CO, LTD. trade name: BARIACE B-32, average particle size: 0.3 $\mu$m) | 30 | - |
| Curing agent | Hexamethylene diisocyanate (manufactured by Nippon Polyurethane Industry, Co., Ltd., trade name: COLONATE HL) | 3 | - |
| Solid content concentration of coating solution (mass%) | | 20 | 3 |

[Preparation examples of thermoplastic resin compositions (a) to (e)]

The thermoplastic resin compositions used in the following production examples of thermoplastic resin films are shown collectively in Table 2. A mixture of the raw materials and compounding ratios described in Table 2 was melted and kneaded with a twin-screw kneader set to 210°C, and the mixture was then extruded in a strand shape by an extruder set to 230°C. After cooling, the sample was cut with a strand cutter to produce pellets of the thermoplastic resin composition, which were used in the following production examples.

[Table 2]

Table 2

| Raw materials used | Thermoplastic resin composition compounding ratio (mass%) | | | | |
| --- | --- | --- | --- | --- | --- |
| | Composition (a) | Composition (b) | Composition (c) | Composition (d) | Composition (e) |
| Propylene homopolymer (manufactured by NIPPON POLYPROPYLENE CORPORATION, trade name: Novatec PP FY4, MFR (230°C, 2.16 kg load): 5 g/10 min, melting point: 165°C) | 100 | 95 | 99.5 | 60 | 80 |

(continued)

| Raw materials used | Thermoplastic resin composition compounding ratio (mass%) | | | | |
|---|---|---|---|---|---|
| | Composition (a) | Composition (b) | Composition (c) | Composition (d) | Composition (e) |
| Heavy calcium carbonate (manufactured by BIHOKU FUNKA KOGYO CO.,LTD. trade name: Softon 1800, average particle size: 1.2 μm) | - | 5 | - | 40 | 20 |
| Glycerol monostearate (manufactured by Wako Pure Chemical Industries, Ltd., reagent) | - | - | 0.5 | - | - |

[Production Example 1 of thermoplastic resin film]

After a thermoplastic resin composition (a) was melted and kneaded with an extruder set to 230°C, the content was supplied to an extrusion die set to 250°C and extruded into a sheet shape. This was cooled to 60°C with a cooling device to obtain an unstretched sheet. This unstretched sheet was then heated to 150°C and stretched five-fold in the machine direction (MD) utilizing the difference in circumferential speeds of a group of rolls. Next, the five-fold stretched sheet was cooled to 60°C, heated again to approximately 155°C using a tenter oven, and stretched eight-fold in the transverse direction (TD). Heat treatment was then further performed with a heat set zone adjusted to 160°C. This was then cooled to 60°C, and after the edge parts were slit, one surface of the biaxially stretched film was subjected to surface treatment by corona discharge. A biaxially stretched resin film with a thickness of 12 μm was thus obtained, and this was used as the thermoplastic resin film of Production Example 1.

[Production Examples 2 to 4 of thermoplastic resin films]

In Production Example 1, biaxially stretched resin films having the thicknesses described in Table 3 were obtained in the same manner as in Production Example 1 with the exception that the amount of resin supplied to the extrusion die was changed, and these were used as the thermoplastic resin films of Production Examples 2 to 4.

[Production Example 5 of thermoplastic resin film]

After a thermoplastic resin composition (b) and thermoplastic resin composition (a) were melted and kneaded with three extruders set to 230°C, the content was supplied to an extrusion die set to 250°C. The content was laminated inside the die and extruded into a sheet shape. This was cooled to 60°C with a cooling device to obtain an unstretched sheet. This unstretched sheet was stretched five-fold in the machine direction while heating at 150°C. Next, the five-fold stretched sheet was cooled to 60°C, heated again to approximately 155°C using a tenter oven, and stretched eight-fold in the transverse direction. Heat treatment was then performed with a heat set zone adjusted to 160°C. This was then cooled to 60°C, and after the edge parts were slit, one surface of the biaxially stretched film was subjected to surface treatment by corona discharge. A biaxially stretched resin film having a thickness of 49 μm, a porosity of 5%, and a three-layer structure [respective layer resin composition (a/b/a), respective layer thickness (2 μm/47 μm/2 μm), respective number of axes of layer stretching (biaxial/biaxial/biaxial)] was thus obtained, and this was used as the thermoplastic resin film of Production Example 5.

[Production Example 6 of thermoplastic resin film]

After a thermoplastic resin composition (c) and thermoplastic resin composition (a) were melted and kneaded with three extruders set to 230°C, the content was supplied to an extrusion die set to 250°C. The content was laminated inside the die and extruded into a sheet shape. This was cooled to 60°C with a cooling device to obtain an unstretched sheet. This unstretched sheet was stretched five-fold in the machine-direction while heating at 150°C. Next, the five-fold stretched sheet was cooled to 60°C, heated again to approximately 155°C using a tenter oven, and stretched eight-fold in the transverse direction. Heat treatment was then performed with a heat set zone adjusted to 160°C. This was then cooled to 60°C, and after the edge parts were slit, one surface of the biaxially stretched film was subjected to surface treatment by corona discharge. A biaxially stretched resin film having a thickness of 45 μm, a porosity of 0%, and a three-layer structure [respective layer resin composition (a/c/a), respective layer thickness (2 μm/41 μm/2 μm), respective number of axes of layer stretching (biaxial/biaxial/biaxial)] was thus obtained, and this was used as the thermoplastic resin film of Production Example 6.

[Production Example 7 of thermoplastic resin film]

A thermoplastic resin film was produced in the same manner as in Production Example 6 with the exception that surface treatment was performed on both surfaces by means of corona discharge, and this was used as the thermoplastic resin film of Production Example 7.

[Production Example 8 of thermoplastic resin film]

After a thermoplastic resin composition (a) was melted and kneaded with an extruder set to 230°C, the content was supplied to an extrusion die set to 250°C and extruded into a sheet shape. This was cooled to 60°C with a cooling device to obtain an unstretched sheet. This unstretched sheet was then heated to 150°C and stretched five-fold in the machine direction utilizing the difference in circumferential speeds of a group of rolls. Next, the five-fold stretched sheet was cooled to 60°C, heated again to approximately 155°C using a tenter oven, and stretched eight-fold in the transverse direction. Heat treatment was then performed with a heat set zone adjusted to 160°C. This was then cooled to 60°C, and after the edge parts were slit, one surface of the biaxially stretched film was subjected to surface treatment by corona discharge. The coating solution of Preparation Example 1 was further applied to the treated surface so that the thickness after drying was 2 μm, and a biaxially stretched resin film with a thickness of 37 μm and a porosity of 0% having a coating layer (C) on one surface was thus obtained. This was used as the thermoplastic resin film of Production Example 8.

[Production Example 9 of thermoplastic resin film]

After a thermoplastic resin composition (a) was melted and kneaded with an extruder set to 230°C, the content was supplied to an extrusion die set to 250°C and extruded into a sheet shape. This was cooled to 60°C with a cooling device to obtain an unstretched sheet. This unstretched sheet was then heated to 150°C and stretched five-fold in the machine direction utilizing the difference in circumferential speeds of a group of rolls. Next, the five-fold stretched sheet was cooled to 60°C, heated again to approximately 155°C using a tenter oven, and stretched eight-fold in the transverse direction. Heat treatment was then performed with a heat set zone adjusted to 160°C. This was then cooled to 60°C, and after the edge parts were slit, one surface of the biaxially stretched film was subjected to surface treatment by corona discharge. The coating solution of Preparation Example 2 was further applied to the treated surface so that the thickness after drying was 0.1 μm, and a biaxially stretched resin film with a thickness of 42.1 μm and a porosity of 0% having a coating layer (C) on one surface was thus obtained. This film was used as the thermoplastic resin film of Production Example 9.

[Production Example 10 of thermoplastic resin film]

A thermoplastic resin film was produced in the same manner as in Production Example 2 with the exception that corona discharge treatment was not performed, and this was used as the thermoplastic resin film of Production Example 10.

The surface resistivities of the thermoplastic resin films obtained in each of the production examples are shown collectively in Table 3.

[Table 3]

Table 3

| Production example of thermoplastic resin film | Layer structure | | Corona surface-treated surface | Coating layer (C) | | Surface resistivity (Ω) | |
|---|---|---|---|---|---|---|---|
| | Thermoplastic resin composition | Thickness (each layer) ($\mu$m) | | Type | Thickness ($\mu$m) | Corona surface-treated surface | Corona surface-untreated surface |
| Production Example 1 | a | 12 | One surface | No | - | 1.4E + 15 | 2.2E + 16 |
| Production Example 2 | a | 42 | One surface | No | - | 2.6E + 14 | 3.5E + 14 |
| Production Example 3 | a | 107 | One surface | No | - | 5.7E + 14 | 8.9E + 14 |
| Production Example 4 | a | 278 | One surface | No | - | 1.2E + 14 | 5.6E + 14 |
| Production Example 5 | a/b/a | 49(2/47/2) | One surface | No | - | 1.4E + 15 | 4.7E + 15 |
| Production Example 6 | a/c/a | 45(2/41/2) | One surface | No | - | 1.3E + 10 | 6.7E + 14 |
| Production Example 7 | a/c/a | 45(2/41/2) | Both surfaces | No | - | 4.9E + 10 9.8E + 10 | - |
| Production Example 8 | a | 35 | One surface | Preparation Example 1 | 2 | 6 | 2.2E + 16 |
| Production Example 9 | a | 42 | One surface | Preparation Example 2 | 0.1 | 1.4E + 12 | 3.5E + 14 |
| Production Example 10 | a | 42 | No | No | - | - | 5.4E + 14 3.6E + 14 |

[Production Example A of laminate-type support layer (A)]

Two sets of rolls of the thermoplastic resin film obtained in Production Example 1 were prepared, and an adhesive agent (manufactured by Toyo-Morton, Ltd., mixed solution of equivalent amounts of trade name: TM-329 and trade name: CAT-18B diluted with ethyl acetate to a solid content of 33 mass%) was applied to the surface of one of the thermoplastic resin films that had undergone corona discharge treatment with a gravure coater at a rate of 60 m/min so that the coated amount after drying was 2 g/m$^2$ (thickness of approximately 2 $\mu$m). After drying for 10 seconds in an oven at 40°C, the surface of the other thermoplastic resin film that had undergone corona discharge treatment was attached, and both films were pressure-welded with a pressure roll to obtain a laminate-type support layer (A) of Production Example A.

[Production Examples B to H of laminate-type support layers (A)]

Laminate-type support layers (A) of Production Examples B to H were obtained in the same manner as in Production Example A with the exception that the films were changed to the combinations of thermoplastic resin films shown in Table 4 in Production Example A. In each of the production examples, the front surface after attachment is a thermoplastic resin film surface that has not undergone corona discharge treatment.

[Table 4]

Table 4

| Production example of support layer (A) | Thermoplastic resin film | |
|---|---|---|
| | Production examples (Front side) | Production examples (Back side) |
| Production Example A | Production Example 1 | Production Example 1 |
| Production Example B | Production Example 2 | Production Example 2 |
| Production Example C | Production Example 3 | Production Example 3 |
| Production Example D | Production Example 6 | Production Example 6 |
| Production Example E | Production Example 8 | Production Example 8 |
| Production Example F | Production Example 9 | Production Example 9 |
| Production Example G | Production Example 8 | Production Example 2 |
| Production Example H | Production Example 9 | Production Example 2 |

[Production Example I of protective layer (B)]

A commercially available biaxially stretched polyethylene terephthalate film (manufactured by Mitsubishi Plastics, Inc., trade name: Diawheel O300, thickness: 100 $\mu$m) was used as a dielectric film, and a conductive coating (manufactured by Dainichiseika Color & Chemicals Mfg.Co.,Ltd., trade name: NEOCON COAT 565DR2) was applied to one surface of the dielectric film so that the solid content after drying was 2 g/m$^2$ (thickness of approximately 2 $\mu$m) to obtain a protective layer (B) having a coating layer (C) on one surface.

[Production Example II of protective layer (B)]

A commercially available biaxially stretched polypropylene film (manufactured by TOYOBO CO., LTD. trade name: P2102, thickness: 50 $\mu$m) that had been subjected to corona discharge treatment was used as a dielectric film, and the coating solution prepared in Preparation Example 1 was applied to the corona discharge surface-treated surface so that the solid content after drying was 2 g/m$^2$ (thickness of approximately 2 $\mu$m) to obtain a protective layer (B) having a coating layer (C) on one surface.

[Production Example III of protective layer (B)]

A commercially available biaxially stretched polypropylene film (manufactured by FUTAMURA CHEMICAL CO., LTD. trade name: FOP-K, thickness: 50 $\mu$m) was used as a dielectric film, and a polyurethane-based adhesive agent (manufactured by Toyo-Morton, Ltd., mixed solution of equivalent amounts of trade name: TM-329 and trade name: CAT-8B) was applied to the corona discharge surface-treated surface so that the solid content was 3 g/m$^2$ (thickness of approximately 3 $\mu$m). After drying, dry lamination was performed so that the aluminum-deposited surface of an aluminum-deposited polyethylene terephthalate film (manufactured by Oike & Co., Ltd., trade name: Tetralite PC, thickness: 12 $\mu$m) was on the outside, and a protective layer (B) having a metal thin film on one surface was thus obtained.

[Production Example IV of protective layer (B)]

After a thermoplastic resin composition (d) was melted and kneaded with an extruder set to 230°C, the content was supplied to an extrusion die set to 250°C and extruded into a sheet shape. This was cooled to 60°C with a cooling device to obtain an unstretched sheet.

This unstretched sheet was then heated to 140°C and stretched five-fold in the machine direction utilizing the difference in circumferential speeds of a group of rolls. Next, after the thermoplastic resin composition (e) was melted and kneaded with two extruders set to 250°C, the composition was extruded into a sheet shape and laminated on both surfaces of the five-fold stretched sheet prepared above so as to obtain a laminated sheet having a three-layer structure. Next, this laminated sheet was cooled to 60°C, heated again to approximately 150°C using a tenter oven, stretched eight-fold in the transverse direction, and then heat-treated by further heating to 160°C.

This was then cooled to 60°C, and after the edge parts were slit, both surfaces of the biaxially stretched film were subjected to surface treatment by corona discharge. The coating solution of Preparation Example 2 was further applied to the treated surface so that the thickness after drying was 0.1 $\mu$m, and a stretched polypropylene film having a thickness of 60 $\mu$m, a porosity of 32%, and a three-layer structure [respective layer resin composition (e/d/e), respective layer thickness (15 $\mu$m/30 $\mu$m/15 $\mu$m), respective number of axes of layer stretching (uniaxial/biaxial/uniaxial)] was thus obtained.

This stretched polypropylene film was used as a dielectric film, and a polyurethane-based adhesive agent (manufactured by Toyo-Morton, Ltd., mixed solution of equivalent amounts of trade name: TM-329 and trade name: CAT-18B) was applied to the back surface so that the solid content was 3 g/m$^2$. After drying, dry lamination was performed so that the surface-treated surface of a biaxially stretched polypropylene film (manufactured by Toyobo Co., Ltd., trade name: P2102, thickness: 20 $\mu$m) that had undergone surface treatment on one surface by means of corona discharge was an adhesive surface, and a protective layer (B) having a coating layer (C) on one surface was thus obtained.

[Production Example V of protective layer (B)]

A commercially available biaxially stretched polypropylene film (manufactured by Futamura Chemical Co., Ltd., trade name: FOP-K, thickness: 50 $\mu$m) was used as a dielectric film, and this was used as a protective layer (B) in this state.

The physical properties (thickness, specific dielectric constant of the dielectric film, and surface resistivity) of the protective layers (B) obtained in each of the production examples are shown collectively in Table 5.

[Table 5]

Table 5

| Production example of protective layer (B) | Layer structure | | Thickness ($\mu$m) | Specific dielectric constant | Surface resistivity ($\Omega$) | |
|---|---|---|---|---|---|---|
| | Dielectric film | Imparted with antistatic performance | | | Surface in contact with support layer (A) | Surface not in contact with support layer (A) |
| Production Example I | BOPET film | Coating layer (C) (Conductive coating) | 102 | 2.9 | 2E + 14 | 3E + 5 |
| Production Example II | BOPP film | Coating layer (C) (Preparation Example 1) | 52 | 2.2 | 2E + 15 | 5E + 12 |
| Production Example III | BOPP film | Aluminum-deposited thin film | 65 | 2.4 | 4E + 15 | 7E - 1 |
| Production Example IV | Stretched polypropylene film | Coating layer (C) (Preparation Example 2) | 83 | 1.7 | 1E + 15 | 2E + 10 |
| Production Example V | BOPP film | No | 50 | 2.2 | 3E + 15 | 1E + 15 |

Working examples 5-8 and 17-26 belong to the invention. Working examples 1-4 and 9-16 do not belong to the invention.

[Working Example 1]

Using the device illustrated in FIG. 14, the support layer (A) obtained in Production Example 2 was unrolled from a roll 21, and the thermoplastic resin film surface (untreated surface) of the support layer (A) was subjected to charge infusion treatment by DC corona discharge. As conditions for charge infusion treatment, the distance between the needle-shaped application electrode 25 and the roll-shaped ground electrode 26 in FIG. 14 was set to 1 cm, and the discharge voltage was set to 13 kV.

On the other hand, the protective layer (B) obtained in Production Example I was unrolled from a roll 22 and laminated so that the charge-infused surface of the aforementioned thermoplastic resin film subjected to charge infusion treatment and the surface of the protective layer (B) on the dielectric film side were in contact, and after both surfaces were pressed with a pressure roll 29, the product was rolled to obtain an electrostatic adsorbable sheet of Working Example 1.

[Working Example 2]

An electrostatic adsorbable sheet of Working Example 2 was obtained in the same manner as in Working Example 1 with the exception that, in Working Example 1, the protective layer (B) obtained in Production Example II was unrolled from the roll 21 instead of the support layer (A) obtained in Production Example 2, that charge infusion treatment was performed on the dielectric film surface of the protective layer (B) rather than the thermoplastic resin film surface of the support layer (A), that the discharge voltage at the time of the charge infusion treatment was set to 15 kV, and that the support layer (A) obtained in Production Example 3 was unrolled from the roll 22 instead of the protective layer (B) of Production Example I.

[Working Example 3]

An electrostatic adsorbable sheet of Working Example 3 was obtained in the same manner as in Working Example 2 with the exception that, in Working Example 2, the protective layer (B) of Production Example IV was used instead of the protective layer (B) of Production Example II, and that the support layer (A) obtained in Production Example 4 was used instead of the support layer (A) obtained in Production Example 3.

[Working Example 4]

An electrostatic adsorbable sheet of Working Example 4 was obtained in the same manner as in Working Example 1 with the exception that, in Working Example 1, the support layer (A) obtained in Production Example 10 was used instead of the support layer (A) obtained in Production Example 2, that the discharge voltage at the time of charge infusion treatment was set to 14 kV, and that the protective layer (B) of Production Example III was used instead of the protective layer (B) of Production Example I.

[Working Example 5]

Using the device illustrated in FIG. 14, the electrostatic adsorbable sheet obtained in Working Example 1 was unrolled from the roll 21, and the thermoplastic resin film surface (untreated surface) of the electrostatic adsorbable sheet was subjected to charge infusion treatment by DC corona discharge. As conditions for charge infusion treatment, the distance between the needle-shaped application electrode 25 and the roll-shaped ground electrode 26 in FIG. 14 was set to 1 cm, and the discharge voltage was set to 20 kV.

On the other hand, the protective layer (B) obtained in Production Example I was unrolled from the roll 22 and laminated so that the aforementioned thermoplastic resin film surface (charge-infused surface) of the electrostatic adsorbable sheet subjected to charge infusion treatment and the surface of the dielectric film side on the protective layer(B) were in contact, and after both surfaces were pressed with the pressure roll 29, the product was rolled to obtain an electrostatic adsorbable sheet of Working Example 5.

[Working Example 6]

An electrostatic adsorbable sheet of Working Example 6 was obtained in the same manner as in Working Example 5 with the exception that, in Working Example 5, the protective layer (B) obtained in Production Example II was unrolled from the roll 21 instead of the electrostatic adsorbable sheet obtained in Working Example 1, that charge infusion treatment was performed on the dielectric film surface of the protective layer (B) rather than the thermoplastic resin film surface of the electrostatic adsorbable sheet, that the discharge voltage at the time of the charge infusion treatment was set to 15 kV, and that the electrostatic adsorbable sheet obtained in Working Example 2 was unrolled from the roll 22 instead of the protective layer (B) of Production Example I.

[Working Example 7]

An electrostatic adsorbable sheet of Working Example 7 was obtained in the same manner as in Working Example 6 with the exception that, in Working Example 6, the electrostatic adsorbable sheet obtained in Working Example 3 was used instead of the electrostatic adsorbable sheet obtained in Working Example 2, and that the discharge voltage at the time of charge infusion treatment was set to 15 kV.

[Working Example 8]

Using the device illustrated in FIG. 14, the support layer (A) obtained in Production Example 10 was unrolled from the roll 21, and one surface thereof was subjected to charge infusion treatment by DC corona discharge. As conditions for charge infusion treatment, the distance between the needle-shaped application electrode 25 and the roll-shaped ground electrode 26 in FIG. 14 was set to 1 cm, and the discharge voltage was set to 14 kV.

On the other hand, the protective layer (B) obtained in Production Example III was unrolled from the roll 22 and laminated so that the thermoplastic resin film surface (charge-infused surface) of the support layer (A) subjected to charge infusion treatment and the surface of the protective layer (B) on the dielectric film side were in contact, and after both surfaces were pressed with the pressure roll 29, the product was rolled to obtain an electrostatic adsorbable laminate.

Next, the aforementioned electrostatic adsorbable laminate was once again placed on the unrolling side (roll 21) of the device, and after the laminate was unrolled, the thermoplastic resin film surface (untreated surface) of the electrostatic adsorbable laminate was subjected to charge infusion treatment by DC corona discharge. The conditions of charge infusion treatment were the same as those described above with the exception that the discharge voltage was set to 17 kV.

On the other hand, the protective layer (B) obtained in Production Example I was unrolled from the roll 22 and laminated so that the aforementioned thermoplastic resin film surface of the electrostatic adsorbable laminate subjected to charge infusion treatment and the surface of the dielectric film side on the protective layer(B) were in contact, and after both surfaces were pressed with the pressure roll 29, the product was rolled to obtain an electrostatic adsorbable sheet of Working Example 8.

[Working Example 9]

An electrostatic adsorbable sheet of Working Example 9 was obtained in the same manner as in Working Example 1 with the exception that, in Working Example 1, the laminate-type support layer (A) obtained in Production Example A was used instead of the support layer (A) obtained in Production Example 2, and that the discharge voltage at the time of charge infusion treatment was set to 10 kV.

[Working Example 10]

An electrostatic adsorbable sheet of Working Example 10 was obtained in the same manner as in Working Example 2 with the exception that, in Working Example 2, the laminate-type support layer (A) obtained in Production Example B was used instead of the support layer (A) obtained in Production Example 3, and that the discharge voltage at the time of charge infusion treatment was set to 19 kV.

[Working Example 11]

An electrostatic adsorbable sheet of Working Example 11 was obtained in the same manner as in Working Example 3 with the exception that, in Working Example 3, the laminate-type support layer (A) obtained in Production Example C was used instead of the support layer (A) obtained in Production Example 4.

[Working Examples 12 to 16]

Electrostatic adsorbable sheets of Working Examples 12 to 16 were obtained in the same manner as in Working Example 9 with the exception that, in Working Example 9, the support layer (A) and protective layer (B) and that the discharge voltage at the time of charge infusion treatment was respectively set as described in Table 6.

[Working Example 17]

An electrostatic adsorbable laminate was obtained in the same manner as in Working Example 2 with the exception that, in Working Example 2, the support layer (A) obtained in Production Example 1 was used instead of the support layer (A) obtained in Production Example 3.

Two sets of the electrostatic adsorbable laminates were prepared, and an adhesive agent (manufactured by Toyo-Morton, Ltd., mixed solution of equivalent amounts of trade name: TM-329 and trade name: CAT-18B diluted with ethyl acetate to a solid content of 33 mass%) was applied to the thermoplastic resin film surface (corona discharge-treated surface) of one of the electrostatic adsorbable laminates with a gravure coater at a rate of 60 m/min so that the coated amount after drying was 2 g/m² (thickness of approximately 2 μm). After drying for 10 seconds in an oven at 40°C, the thermoplastic resin film surface (corona discharge-treated surface) of the other electrostatic adsorbable laminate was attached, and both films were pressure-welded with a pressure roll to obtain an electrostatic adsorbable sheet of Working Example 17.

[Working Example 18]

An electrostatic adsorbable laminate was obtained in the same manner as in Working Example 1 with the exception that, in Working Example 1, the protective layer (B) obtained in Production Example II was used instead of the protective layer (B) obtained in Production Example I.

Two sets of the electrostatic adsorbable laminates were prepared, and an adhesive agent (manufactured by Toyo-Morton, Ltd., mixed solution of equivalent amounts of trade name: TM-329 and trade name: CAT-18B diluted with ethyl acetate to a solid content of 33 mass%) was applied to the thermoplastic resin film surface (corona discharge-treated surface) of one of the electrostatic adsorbable laminates with a gravure coater at a rate of 60 m/min so that the coated amount after drying was 2 g/m² (thickness of approximately 2 μm). After drying for 10 seconds in an oven at 40°C, the thermoplastic resin film surface (corona discharge-treated surface) of the other electrostatic adsorbable laminate was attached, and both films were pressure-welded with a pressure roll to obtain an electrostatic adsorbable sheet of Working Example 18.

[Working Examples 19 to 23]

Electrostatic adsorbable sheets of Working Examples 19 to 23 were obtained in the same manner as in Working Example 18 with the exception that, in Working Example 18, the combination of the support layer (A) and the protective layer (B) in the electrostatic adsorbable laminate was changed to those shown in Table 7.

[Working Examples 24 and 25]

Electrostatic adsorbable sheets of Working Examples 24 and 25 were obtained in the same manner as in Working Example 18 with the exception that, in Working Example 18, the combination of the support layer (A) and the protective layer (B) in the electrostatic adsorbable laminate was changed to those shown in Table 7 so as to yield combinations in which the electrostatic adsorbable layer on the front side and the electrostatic adsorbable layer on the back side were different.

[Working Example 26]

The electrostatic adsorbable sheet obtained in Working Example 12 was placed on the unrolling side (roll 21) of the device illustrated in FIG. 14, and after this was unrolled, the thermoplastic resin film surface (untreated surface) of the electrostatic adsorbable sheet was subjected to charge infusion treatment by DC corona discharge. As conditions for charge infusion treatment, the distance between the needle-shaped application electrode 25 and the roll-shaped ground electrode 26 in FIG. 14 was set to 1 cm, and the discharge voltage was set to 20 kV.

On the other hand, the protective layer (B) obtained in Production Example II was unrolled from the roll (22) and laminated so that the aforementioned thermoplastic resin film surface of the electrostatic adsorbable sheet subjected to charge infusion treatment and the surface of the dielectric film side on the protective layer(B) were in contact, and after both surfaces were pressed with the pressure roll (29), the product was rolled to obtain an electrostatic adsorbable sheet of Working Example 26.

[Comparative Examples 1 and 2]

These examples were performed in the same manner as in Working Example 18 with the exception that, in Working Example 18, the combination of the support layer (A) and the protective layer (B) in the electrostatic adsorbable laminate was changed to those shown in Table 7. However, in Comparative Examples 1 and 2, electrostatic adsorptive force was not expressed, and an electrostatic adsorbable sheet was not obtained. In Comparative Example 2, the sheet was wrapped around the conveyor roll, and the machine was stopped, so an electrostatic adsorbable sheet was not obtained continuously.

The combinations of the support layer (A) and the protective layer (B) used in Working Examples 1 to 26 of the present invention and Comparative Examples 1 and 2, the processing conditions, the physical properties of the support layer (A) after the protective layer (B) was removed from the electrostatic adsorbable sheet, and the evaluation results based on the following test examples are shown collectively in Tables 6 and 7.

[Table 6]

Table 6-1

| | | Layer structure | | | Processing conditions | | | | | |
|---|---|---|---|---|---|---|---|---|---|---|
| | | | | | Charge infusion equipment | | Discharge surface | | Discharge voltage (kV) | |
| | | Protective layer (B) (front) | Support layer (A) | Protective layer (B) (back) | Yes (Roll 41) | No (Roll 42) | Front | Back | Front | Back |
| | Working Example 1 | - | Production Example 2 | Production Example I | Support layer (A) Production Example 2 | Protective layer (B) Production Example I | - | Layer (A) | - | 13 |
| | Working Example 2 | - | Production Example 3 | Production Example II | Protective layer (B) Production Example II | Support layer (A) Production Example 3 | - | Layer (B) | - | 15 |
| | Working Example 3 | - | Production Example 4 | Production Example IV | Protective layer (B) Production Example IV | Support layer (A) Production Example 4 | - | Layer (B) | - | 15 |
| | Working Example 4 | - | Production Example 10 | Production Example III | Support layer (A) Production Example 10 | Protective layer (B) Production Example III | - | Layer (A) | - | 14 |
| | Working Example 5 | Production Example I | Production Example 2 | Production Example I | Electrostatic adsorbable sheet Working Example 1 | Protective layer (B) Production Example I | Layer (A) | Layer (A) | 20 | 13 |
| | Working Example 6 | Production Example II | Production Example 3 | Production Example II | Protective layer (B) Production Example II | Electrostatic adsorbable sheet Working Example 2 | Layer (B) | Layer (B) | 15 | 15 |

| | | Layer structure | | | Processing conditions | | | | | |
| | | | | | Charge infusion equipment | | Discharge surface | | Discharge voltage (kV) | |
| | | Protective layer (B) (front) | Support layer (A) | Protective layer (B) (back) | Yes (Roll 41) | No (Roll 42) | Front | Back | Front | Back |
|---|---|---|---|---|---|---|---|---|---|---|
| Working Examples | Working Example 7 | Production Example II | Production Example 4 | Production Example II | Protective layer (B) Production Example II | Electrostatic adsorbable sheet Working Example 3 | Layer (B) | Layer (B) | 15 | 15 |
| | Working Example 8 | Production Example I | Production Example 10 | Production Example III | Protective layer (B) Production Example 1 | Electrostatic adsorbable sheet Working Example 4 | Layer (B) | Layer (A) | 17 | 14 |
| | Working Example 9 | - | Production Example 1/adhesive agent/ Production Example 1 | Production Example I | Support layer (A) Production Example A | Protective layer (B) Production Example I | - | Layer (A) | - | 10 |
| | Working Example 10 | - | Production Example 2/adhesive agent/ Production Example 2 | Production Example II | Protective layer (B) Production Example II | Support layer (A) Production Example B | - | Layer (B) | - | 19 |
| | Working Example 11 | - | Production Example 3/adhesive agent/ Production Example 3 | Production Example IV | Protective layer (B) Production Example IV | Support layer (A) Production Example C | - | Layer (B) | - | 15 |
| | Working Example 12 | - | Production Example 6/adhesive agent/ Production Example 6 | Production Example II | Support layer (A) Production Example D | Protective layer (B) Production Example II | - | Layer (A) | - | 20 |

EP 3 042 765 B1

32

| | | Layer structure | | | Processing conditions | | | | | |
| --- | --- | --- | --- | --- | --- | --- | --- | --- | --- | --- |
| | | | | | Charge infusion equipment | | Discharge surface | | Discharge voltage (kV) | |
| | | Protective layer (B) (front) | Support layer (A) | Protective layer (B) (back) | Yes (Roll 41) | No (Roll 42) | Front | Back | Front | Back |
| | Working Example 13 | - | Production Example 8/adhesive agent/ Production Example 8 | Production Example II | Support layer (A) Production Example E | Protective layer (B) Production Example II | - | Layer (A) | - | 16 |
| | Working Example 14 | - | Production Example 9/adhesive agent/ Production Example 9 | Production Example IV | Support layer (A) Production Example F | Protective layer (B) Production Example IV | - | Layer (A) | - | 19 |
| | Working Example 15 | - | Production Example 8/adhesive agent/ Production Example 2 | Production Example IV | Support layer (A) Production Example G | Protective layer (B) Production Example IV | - | Layer (A) | - | 18 |

EP 3 042 765 B1

33

Table 6-2

| | | Physical properties of support layer (A) | | | | | Evaluation results of support layer (A) | | | | |
|---|---|---|---|---|---|---|---|---|---|---|---|
| | | Thickness (μm) | Total light transmittance (%) | Surface potential (kV) | | | Blocking | Electrostatic adsorptive force | | Display object adsorb ability | Visibility through adherend |
| | | | | Front | Back | Product | | Evaluation | adsorptive force (g/m$^2$) | | |
| Working Examples | Working Example 1 | 42 | 92 | 0.68 | -0.73 | -0.50 | ○ | ○ | 13500 | ○ | ○ |
| | Working Example 2 | 107 | 84 | 0.95 | -0.91 | -0.86 | ○ | ○ | 26400 | ○ | ○ |
| | Working Example 3 | 278 | 72 | 1.05 | -1.21 | -1.27 | ○ | ○ | 28100 | ○ | ○ |
| | Working Example 4 | 42 | 92 | 0.72 | -0.75 | -0.54 | ○ | ○ | 24700 | ○ | ○ |
| | Working Example 5 | 42 | 92 | -0.21 | 0.18 | -0.04 | ○ | ○ | 12100 | ○ | ○ |
| | Working Example 6 | 107 | 84 | -0.35 | 0.24 | -0.08 | ○ | ○ | 21500 | ○ | ○ |
| | Working Example 7 | 278 | 72 | -0.54 | 0.45 | -0.24 | ○ | ○ | 23600 | ○ | ○ |
| | Working Example 8 | 42 | 92 | -0.19 | 0.17 | -0.03 | ○ | ○ | 18000 | ○ | ○ |
| | Working Example 9 | 26 | 90 | 0.47 | -0.52 | -0.24 | ○ | ○ | 8700 | ○ | ○ |
| | Working Example 10 | 86 | 79 | 0.80 | -0.86 | -0.69 | ○ | ○ | 25600 | ○ | ○ |
| | Working Example 11 | 216 | 68 | 0.95 | -0.97 | -0.92 | ○ | ○ | 31500 | ○ | ○ |
| | Working Example 12 | 92 | 84 | 0.90 | -0.92 | -0.83 | ○ | ○ | 27600 | ○ | ○ |
| | Working Example 13 | 72 | 75 | 0.77 | -0.80 | -0.62 | ○ | ○ | 18400 | ○ | ○ |

(continued)

| | | Physical properties of support layer (A) | | | | | Evaluation results of support layer (A) | | | | |
|---|---|---|---|---|---|---|---|---|---|---|---|
| | | Thickness (μm) | Total light transmittance (%) | Surface potential (kV) | | | Blocking | Electrostatic adsorptive force | | Display object adsorb ability | Visibility through adherend |
| | | | | Front | Back | Product | | Evaluation | adsorptive force (g/m$^2$) | | |
| | Working Example 14 | 86 | 80 | 0.80 | -0.82 | -0.66 | ○ | ○ | 21500 | ○ | ○ |
| | Working Example 15 | 79 | 88 | 0.70 | -0.70 | -0.49 | ○ | ○ | 20100 | ○ | ○ |

[Table 7]

Table 7-1

| | | Layer structure | | | Processing conditions | | | | | |
|---|---|---|---|---|---|---|---|---|---|---|
| | | | | | Charge infusion equipment | | Discharge surface | | Discharge voltage (kV) | |
| | | Protective layer (B) (front) | Support layer (A) | Protective layer (B) (back) | Yes (Roll 41) | No (Roll 42) | Front | Back | Front | Back |
| Working Examples | Working Example 17 | Production Example II | Production Example 1/adhesive agent/ Production Example 1 | Production Example II | Protective layer (B) Production Example II | Support layer (A) Production Example 1 | Layer (B) | Layer (B) | 15 | 15 |
| | Working Example 18 | Production Example II | Production Example 2/adhesive agent/ Production Example 2 | Production Example II | Support layer (A) Production Example 2 | Protective layer (B) Production Example II | Layer (A) | Layer (A) | 13 | 13 |
| | Working Example 19 | Production Example II | Production Example 3 adhesive agent/ Production Example 3 | Production Example III | Support layer (A) Production Example 3 | Protective layer (B) Production Example II | Layer (A) | Layer (A) | 21 | 21 |
| | Working Example 20 | Production Example II | Production Example 4/adhesive agent/ Production Example 4 | Production Example II | Support layer (A) Production Example 4 | Protective layer (B) Production Example II | Layer (A) | Layer (A) | 30 | 30 |
| | Working Example 21 | Production Example II | Production Example 5/adhesive agent/ Production Example 5 | Production Example II | Support layer (A) Production Example 5 | Protective layer (B) Production Example II | Layer (A) | Layer (A) | 15 | 15 |
| | Working Example 22 | Production Example I | Production Example 8/adhesive agent/ Production Example 8 | Production Example I | Support layer (A) Production Example 8 | Protective layer (B) Production Example I | Layer (A) | Layer (A) | 12 | 12 |
| | Working Example 23 | Production Example I | Production Example 9/adhesive agent/ Production Example 9 | Production Example I | Support layer (A) Production Example 9 | Protective layer (B) Production Example I | Layer (A) | Layer (A) | 14 | 14 |

37

(continued)

| | | Layer structure | | | Processing conditions | | | | | | |
|---|---|---|---|---|---|---|---|---|---|---|---|
| | | Support layer (A) | Protective layer (B) (front) | Protective layer (B) (back) | Charge infusion equipment | | Discharge surface | | Discharge voltage (kV) | | |
| | | | | | Yes (Roll 41) | No (Roll 42) | Front | Back | Front | Back | |
| | Working Example 24 | Production Example 1/adhesive agent/ Production Example 2 | Production Example I | Production Example II | Support layer (A) Production Example 1 | Protective layer (B) Production Example I | Layer (A) | - | 9 | 13 | |
| | | | | | Support layer (A) Production Example 2 | Protective layer (B) Production Example II | - | Layer (A) | | | |
| | Working Example 25 | Production Example 2/adhesive agent/ Production Example 8 | Production Example II | Production Example I | Support layer (A) Production Example 2 | Protective layer (B) Production Example II | Layer (A) | - | 13 | 12 | |
| | | | | | Support layer (A) Production Example 8 | Protective layer (B) Production Example I | - | Layer (A) | | | |
| | Working Example 26 | Production Example 6/adhesive agent/ Production Example 6 | Production Example II | Production Example II | Support layer (A) Working Example 12 | Protective layer (B) Production Example II | Layer (A) | Layer (A) | 14 | 14 | |
| Comparative Examples | Comparative example 1 | Production Example 7/adhesive agent/ Production Example 7 | Production Example I | Production Example I | Support layer (A) Production Example 7 | Protective layer (B) Production Example I | Layer (A) | Layer (A) | 14 | 14 | |
| | Comparative example 2 | Production Example 8/adhesive agent/ Production Example 8 | Production Example V | Production Example V | Support layer (A) Production Example 8 | Protective layer (B) Production Example V | Layer (A) | Layer (A) | 12 | 12 | |

Table 7-2

| | | Physical properties of support layer (A) | | | | | Evaluation results of support layer (A) | | | | |
|---|---|---|---|---|---|---|---|---|---|---|---|
| | | Thickness ($\mu$m) | Total light transmittance (%) | Surface potential (kV) | | | Blocking | Electrostatic adsorptive force | | Display object adsorbability | Visibility through adherend |
| | | | | Front | Back | Product | | Evaluation | adsorptive force (g/m$^2$) | | |
| Working Examples | Working Example 17 | 26 | 90 | 0.22 | -0.25 | -0.06 | ○ | ○ | 7500 | Δ | ○ |
| | Working Example 18 | 86 | 79 | 0.30 | -0.43 | -0.13 | ○ | ○ | 17800 | ○ | ○ |
| | Working Example 19 | 216 | 68 | 0.45 | -0.52 | -0.23 | ○ | ○ | 25300 | ○ | ○ |
| | Working Example 20 | 558 | 53 | 0.46 | -0.58 | -0.27 | ○ | Δ | 750 | × | Unable to attach |
| | Working Example 21 | 100 | 46 | 0.32 | -0.45 | -0.14 | ○ | ○ | 20000 | ○ | × |
| | Working Example 22 | 72 | 75 | 0.32 | -0.36 | -0.12 | ○ | ○ | 21500 | ○ | ○ |
| | Working Example 23 | 86 | 80 | 0.33 | -0.40 | -0.13 | ○ | ○ | 24500 | ○ | ○ |
| | Working Example 24 | 56 | 88 | 0.31 | -0.36 | -0.11 | ○ | ○ | 16300 | ○ | ○ |
| | Working Example 25 | 79 | 82 | 0.23 | -0.38 | -0.09 | ○ | ○ | 15400 | ○ | ○ |
| | Working Example 26 | 92 | 84 | 0.25 | -0.42 | -0.11 | ○ | ○ | 27500 | ○ | ○ |
| Comparative Examples | Comparative example 1 | 92 | 83 | 0.00 | 0.00 | 0.00 | ○ | × | 0 | × | Unable to attach |
| | Comparative example 2 | 72 | 75 | 0.29 | -0.39 | -0.11 | × | Δ | 2250 | ○ | ○ |

[Test examples]

(Blocking)

The electrostatic adsorbable sheet obtained in each working example and comparative example was cut into a size of 250 mm x 350 mm with a guillotine cutter, and a bundle of 50 sheets was produced. After being stored for one day in an atmosphere at a temperature of 23°C and a relative humidity of 50%, ten electrostatic adsorbable sheets were sequentially removed one sheet at a time from the top of the bundle that was produced in the same atmosphere, and the peelability with respect to the lower electrostatic adsorbable sheet and the presence or absence of lifting between the support layer (A) and the protective layer (B) were evaluated in accordance with the following criteria.

○: Good; The peeling was mild, and no lifting occurred in any of the ten sheets.

△: Fair; Peeling was severe, but no lifting occurred in any of the ten sheets.

✕: Poor; Peeling was severe, and there were sheets in which lifting occurred.

(Electrostatic adsorptive force)

The electrostatic adsorbable sheet obtained in each working example and comparative example was cut into a size of 200 mm x 220 mm with a guillotine cutter, and after this was stored for one day in an atmosphere at a temperature of 23°C and a relative humidity of 50%, the protective layer (B) of the electrostatic adsorbable sheet was peeled away in the same atmosphere. The obtained support layer (A) was attached to a glass sheet 32 of the electrostatic adsorptive force measurement device illustrated in FIG. 15 so that the adsorption area was 200 mm x 200 mm and so that a width of 20 mm at the lower end of the support layer (A) 31 stuck out. Next, a clip 34 was attached to the lower end portion of the support layer (A) 31, and a weight 36 of 10 g to which a fishing line 35 was attached, was added to the clip 34 one by one. The electrostatic adsorptive force was determined in terms of the value per square meter from the weight of the weight 36 when the support layer (A) 31 fell from the glass sheet 32, and evaluations were made in accordance with the following criteria.

○: Good; The adsorptive force was at least 5,000 g/m$^2$.
△: Fair: The adsorptive force was at least 500 g/m$^2$ and less than 5,000 g/m$^2$.
✕: Poor; The adsorptive force was less than 1,000 g/m$^2$.

(Display object adsorbability)

A pattern of N7RGB.TIF according to JIS-X-9204 was printed on the printing surface of a piece of A4 size inkjet paper (manufactured by the Yupo Corporation, trade name: XAB1020) using an inkjet printer (manufactured by SEIKO EPSON CORPORATION trade name: PM-G860) to form a printed matter 54.
Next, the electrostatic adsorbable sheet obtained in each working example and comparative example was cut into a size of 250 mm x 350 mm with a guillotine cutter, and after this was stored for one day in an atmosphere at a temperature of 23°C and a relative humidity of 50%, the protective layer (B) of the back surface was peeled away and the printed surface of the printed matter 54 was attached so as to be in contact with the support layer (A) 53 in the same atmosphere. Next, the protective layer (B) of the front surface was peeled away from the electrostatic adsorbable sheets of Working Examples 5 to 8, Working Examples 17 to 25, and Comparative Examples 1 and 2, and the support layer (A) 53 was attached to the glass sheet 52 to form the display object 51 illustrated in FIG. 18.
The adsorbability when the support layer (A) holding the printed matter is attached to the glass sheet was evaluated from the ease of attachment in accordance with the following criteria.

○: Good; Easy to attach and no misalignment, wrinkles or the like observed.
△: Fair; Difficult to attach, but no misalignment, wrinkles or the like observed.
✕: Poor; The printed matter fell off.

(Visibility)

In the printed objects used in the adsorbability evaluations described above, the visibility of the printed pattern of the printed matter was evaluated from the opposite surface of the glass sheet (surface to which the display object is not attached) in accordance with the following criteria.

Good; The pattern can be precisely recognized to degree comparable to the original pattern.
Fair; There is slight white turbidity, but a detailed pattern can also be recognized.
Poor; The detailed pattern is blurred and cannot be recognized.

As a result, the visibility was good in all of the display objects of the embodiments of Working Examples 1 to 19 and Working Examples 22 to 26. However, the visibility through the adherend diminished and was poor in the display objects of the embodiments of Working Examples 20 and 21. This is thought to have occurred because the total light transmittance of the support layer (A) in these working examples is not within the range of from 60 to 100%. However, even the display objects of such embodiments can be used as electrostatic adsorbable sheets without any problem as long as it is not presupposed that the object must be viewed through the adherend when the adherend is an opaque adherend such as a wall.

As is clear from Tables 6 and 7, the electrostatic adsorbable sheets of Working Examples 1, 4, 5, 9, 12 to 16, and 18 to 26, in which a protective layer (B) containing a dielectric film was laminated, by means of electrostatic adsorption, on at least one surface of a support layer (A) containing a thermoplastic resin film subjected to charging treatment, and the electrostatic adsorbable sheets of Working Examples 2, 3, 6, 7, 10, 11, and 17, in which a protective layer (B) containing a dielectric film subjected to charging treatment was laminated, by means of electrostatic adsorption, on at least one surface of a support layer (A) containing a thermoplastic resin film, demonstrated the prescribed electrostatic adsorptive force.

In addition, the electrostatic adsorbable sheet of Working Example 8, which combined the feature that a protective layer (B) containing a dielectric film is laminated by electrostatic adsorption on one surface of a support layer (A) containing a thermoplastic resin film subjected to charging treatment and the feature that a dielectric film (B) subjected to charging treatment is laminated by electrostatic adsorption on a support layer (A) containing a thermoplastic resin film, also demonstrated the prescribed electrostatic adsorptive force.

Furthermore, even when a protective layer (B) was provided on only one surface of the electrostatic adsorbable sheet, as in Working Examples 1 to 4 and 9 to 16, the support layer (A) demonstrated an electrostatic adsorptive force on both surfaces after the protective layer (B) is removed from the sheet.

On the other hand, in the case of the sheet of Comparative Example 1, although an attempt was made to laminate a protective layer (B) containing a dielectric film on both surfaces of a support layer (A) containing a thermoplastic resin film subjected to charging treatment, lamination was not possible by means of electrostatic adsorption. This is thought to have occurred because the surface resistivity of both surfaces of the support layer (A) was not within the range of from $1 \times 10^{13}$ to $9 \times 10^{17}$ $\Omega$.

In addition, the sheet of Comparative Example 2 was not produced continuously due to the wrapping of the sheet around the machine, which caused blocking even when formed into a sheet. This is thought to have occurred because the surface resistivity of the surfaces not in contact with the support layer (A) of the protective layers (B) present on both surfaces of the electrostatic adsorbable sheet was not within the range of from $1 \times 10^{-1}$ to $9 \times 10^{12}$ $\Omega$.

The present invention was described in detail and with reference to specific embodiments, but it is clear to those skilled in the art that various changes and modifications can be made as long as they do not depart from the scope of the present invention.

Industrial Applicability

In the electrostatic adsorbable sheet of the present invention, for example, by interposing a support layer between non-adhesive printed matter or the like on one surface and an adherend on the other surface so as to bind one another by electrostatic adsorption, it is possible to attach the printed matter or the like to the adherend in the form of a so-called double-sided adhesive sheet. A display object obtained in this way can be used as a display object such as a seal, a label, a sign, a poster, or an advertisement in accordance with the display content, dimensions, shape, and display format.

In addition, the printed matter and the electrostatic adsorbable sheet can be distinguished from one another and recovered separately when the display object becomes unnecessary, so each of them can be recycled easily. Since the adherend is not contaminated, it is possible to produce an environment-friendly display object.

Reference Signs List

1 Electrostatic adsorbable sheet
2 Support layer (A)
3, 3a, 3b Protective layer (B)

4, 4a, 4b Thermoplastic resin film
5 Adhesive agent
6, 6a, 6b Electrostatic adsorbable laminate
7, 7a, 7b Dielectric film
8, 8a, 8b Coating layer (C)
9, 9a, 9b Coating layer (C)
10, 10a, 10b Adhesive surface using electrostatic adsorption
11 Thermoplastic resin film or protective layer (B)
12 DC high-voltage power supply
13 Needle-shaped application electrode (planar arrangement)
14 Sheet-shaped ground electrode (metal sheet)
15 Wire-shaped application electrode
16 Needle-shaped application electrode (planar arrangement)
17 Roll-shaped ground electrode (metal roll)
18 Wire-shaped application electrode
19 Needle-shaped application electrode (horizontal single-row arrangement)
21 Roll
22 Roll
23 Electrostatic adsorbable laminate or electrostatic adsorbable sheet
24 DC high-voltage power supply
25 Needle-shaped application electrode (horizontal single-row arrangement)
26 Roll-shaped ground electrode (metal roll)
27 Guide roll (ground/earth connection)
28 Nip roll
29 Nip roll (pressure roll)
31 Support layer (A)
32 Glass sheet
33 Column
34 Clip
35 Fishing line
36 Weight (load)
41 Support layer (A)
42 Ground mounting metal sheet
43 Surface potentiometer
44 Measurement device
45 Measurement location
51 Display object
52 Adherend (glass sheet or the like)
53 Support layer (A)
54 Printed matter
55 Protective layer (B)

## Claims

1. An electrostatic adsorbable sheet comprising:

   a support layer (A) comprising a thermoplastic resin film having undergone charging treatment; and
   protective layers (B) comprising a dielectric film,
   wherein the protective layers (B) are laminated on both surfaces of the support layer (A) by means of electrostatic adsorption.

2. An electrostatic adsorbable sheet comprising:

   a support layer (A) comprising a thermoplastic resin film; and
   protective layers (B) comprising a dielectric film having undergone charging treatment,
   wherein the protective layers (B) are laminated on both surfaces of the support layer (A) by means of electrostatic adsorption.

3. The electrostatic adsorbable sheet according to claim 1 or 2, wherein a surface resistivity of both surfaces of the support layer (A) is from $1 \times 10^{13}$ to $9 \times 10^{17}$ $\Omega$, wherein the surface resistivity is measured in accordance with JIS-K-6911.

4. The electrostatic adsorbable sheet according to any one of claims 1 to 3, wherein a surface resistivity of a surface of the protective layer (B) in contact with the support layer (A) is from $1 \times 10^{13}$ to $9 \times 10^{17}$ $\Omega$, and a surface resistivity of a surface of the protective layer (B) not in contact with the support layer (A) is from $1 \times 10^{-1}$ to $9 \times 10^{12}$ $\Omega$, wherein the surface resistivity is measured in accordance with JIS-K-6911 when the surface resistivity is $1 \times 10^{7}$ $\Omega$ or higher, and wherein the surface resistivity is measured in accordance with JIS-K-7194 when the surface resistivity is less than $1 \times 10^{7}$ $\Omega$.

5. The electrostatic adsorbable sheet according to any one of claims 1 to 4, wherein a total light transmittance of the support layer (A) measured in accordance with JIS-K-7105 is from 60 to 100%.

6. The electrostatic adsorbable sheet according to any one of claims 1 to 5, wherein the charging treatment comprises DC corona discharge treatment.

7. The electrostatic adsorbable sheet according to any one of claim 1 or claims 3 to 6, wherein the charging treatment is performed on both surfaces of the thermoplastic resin film.

8. The electrostatic adsorbable sheet according to any one of claims 1 to 7, wherein the support layer (A) is a laminate comprising at least two thermoplastic resin films.

9. The electrostatic adsorbable sheet according to claim 8 comprising:
two electrostatic adsorbable laminates, each comprising a thermoplastic resin film having undergone charging treatment and a protective layer (B) laminated on one surface of the thermoplastic resin film by means of electrostatic adsorption, wherein the two electrostatic adsorbable laminates are laminated on each other via an adhesive agent so that the thermoplastic resin films are in contact with one another.

10. The electrostatic adsorbable sheet according to claim 8 or 9, wherein a surface resistivity of a surface of the thermoplastic resin film in contact with the protective layer (B) is from $1 \times 10^{13}$ to $9 \times 10^{17}$ $\Omega$, and a surface resistivity of a surface of the thermoplastic resin film not in contact with the protective layer (B) is from $1 \times 10^{-1}$ to $9 \times 10^{12}$ $\Omega$, wherein the surface resistivity is measured in accordance with JIS-K-6911 when the surface resistivity is $1 \times 10^{7}$ $\Omega$ or higher, and wherein the surface resistivity is measured in accordance with JIS-K-7194 when the surface resistivity is less than $1 \times 10^{7}$ $\Omega$.

11. The electrostatic adsorbable sheet according to any one of claims 1 to 10, wherein a product of a surface potential on a front side of the support layer (A) and a surface potential on a back side of the support layer (A) obtained by peeling the entire protective layer (B) from the electrostatic adsorbable sheet is a negative value.

12. The electrostatic adsorbable sheet according to claim 11, wherein a product of a surface potential on a front side of the support layer (A) and a surface potential on a back side of the support layer (A) obtained by peeling the entire protective layer (B) from the electrostatic adsorbable sheet is from -0.07 to -4.00 $kV^2$, wherein the surface potential is measured by performing state adjustment for at least 24 hours under conditions at a temperature of 23°C and relative humidity of 50% on an electrostatic adsorbable sheet cut to a size of 15 cm x 15 cm, peeling the protective layer (B) from the support layer (A), placing the support layer (A) on a metal plate to which a ground is mounted, and using a surface potentiometer so that the distance between the support layer (A) and the surface potentiometer is 2 mm.

13. A display object obtained by peeling one protective layer (B) from the electrostatic adsorbable sheet of any one of claims 1 to 12, laminating printed matter on one surface of the support layer (A) by means of electrostatic adsorption, then peeling the other protective layer (B) of the electrostatic adsorbable sheet, and attaching the other surface of the support layer (A) to an adherend by means of electrostatic adsorption.

**Patentansprüche**

1. Elektrostatisch adsorbierbare Folie, umfassend:

eine Tragschicht (A), die einen thermoplastischen Harzfilm umfasst, der eine Ladebehandlung durchlaufen hat; und

Schutzschichten (B), die einen dielektrischen Film umfassen,

wobei die Schutzschichten (B) auf beiden Flächen der Tragschicht (A) mittels elektrostatischer Adsorption auflaminiert sind.

2. Elektrostatisch adsorbierbare Folie, umfassend:

   eine Tragschicht (A), die einen thermoplastischen Harzfilm umfasst; und

   Schutzschichten (B), die einen dielektrischen Film umfassen, der eine Ladebehandlung durchlaufen hat,

   wobei die Schutzschichten (B) auf beiden Flächen der Tragschicht (A) mittels elektrostatischer Adsorption auflaminiert sind.

3. Elektrostatisch adsorbierbare Folie nach Anspruch 1 oder 2, wobei ein spezifischer Oberflächenwiderstand beider Flächen der Tragschicht (A) von $1 \times 10^{13}$ bis $9 \times 10^{17}$ Ω beträgt, wobei der spezifische Oberflächenwiderstand nach JIS-K-6911 gemessen ist.

4. Elektrostatisch adsorbierbare Folie nach einem der Ansprüche 1 bis 3, wobei ein spezifischer Oberflächenwiderstand einer mit der Tragschicht (A) in Kontakt befindlichen Fläche der Schutzschicht (B) von $1 \times 10^{13}$ bis $9 \times 10^{17}$ Ω beträgt, und ein spezifischer Oberflächenwiderstand einer mit der Tragschicht (A) nicht in Kontakt befindlichen Fläche der Schutzschicht (B) von $1 \times 10^{-1}$ bis $9 \times 10^{12}$ Ω beträgt, wobei der spezifische Oberflächenwiderstand nach JIS-K-6911 gemessen wird, wenn der spezifische Oberflächenwiderstand $1 \times 10^{7}$ Ω oder höher ist, und wobei der spezifische Oberflächenwiderstand nach JIS-K-7194 gemessen wird, wenn der spezifische Oberflächenwiderstand weniger als $1 \times 107$ Ω beträgt.

5. Elektrostatisch adsorbierbare Folie nach einem der Ansprüche 1 bis 4, wobei eine nach JIS-K-7105 gemessene Gesamtlichtdurchlässigkeit der Tragschicht (A) 60 bis 100 % beträgt.

6. Elektrostatisch adsorbierbare Folie nach einem der Ansprüche 1 bis 5, wobei die Ladebehandlung eine Gleichstrom-Koronaentladungsbehandlung umfasst.

7. Elektrostatisch adsorbierbare Folie nach einem der Ansprüche 1 oder 3 bis 6, wobei die Ladebehandlung an beiden Flächen des thermoplastischen Harzfilms erfolgt.

8. Elektrostatisch adsorbierbare Folie nach einem der Ansprüche 1 bis 7, wobei die Tragschicht (A) ein Laminat ist, das mindestens zwei thermoplastische Harzfilme umfasst.

9. Elektrostatisch adsorbierbare Folie nach Anspruch 8, umfassend:
   zwei elektrostatisch adsorbierbare Laminate, wovon jedes einen thermoplastischen Harzfilm, der eine Ladebehandlung durchlaufen hat, und eine Schutzschicht (B) umfasst, die auf eine Fläche des thermoplastischen Harzfilms mittels elektrostatischer Adsorption auflaminiert ist, wobei die zwei elektrostatisch adsorbierbaren Laminate über ein Haftmittel so übereinander auflaminiert sind, das die thermoplastischen Harzfilme in Kontakt miteinander sind.

10. Elektrostatisch adsorbierbare Folie nach Anspruch 8 oder 9, wobei ein spezifischer Oberflächenwiderstand einer mit der Schutzschicht (B) in Kontakt befindlichen Fläche des thermoplastischen Harzfilms $10^{13}$ bis $9 \times 10^{17}$ Ω beträgt, und ein spezifischer Oberflächenwiderstand einer mit der Schutzschicht (B) nicht in Kontakt befindlichen Fläche des thermoplastischen Harzfilms $1 \times 10^{-1}$ bis $9 \times 10^{12}$ Ω beträgt, wobei der spezifische Oberflächenwiderstand nach JIS-K-6911 gemessen wird, wenn der spezifische Oberflächenwiderstand $1 \times 10^{7}$ Ω oder höher ist, und wobei der spezifische Oberflächenwiderstand nach JIS-K-7194 gemessen wird, wenn der spezifische Oberflächenwiderstand weniger als $1 \times 10^{7}$ Ω beträgt.

11. Elektrostatisch adsorbierbare Folie nach einem der Ansprüche 1 bis 10, wobei ein Produkt aus einem Oberflächenpotential auf einer Vorderseite der Tragschicht (A) und einem Oberflächenpotential auf einer Rückseite der Tragschicht (A), erhalten durch Ablösen der gesamten Schutzschicht (B) von der elektrostatisch adsorbierbaren Folie, einen negativen Wert hat.

12. Elektrostatisch adsorbierbare Folie nach Anspruch 11, wobei ein Produkt aus einem Oberflächenpotential auf einer Vorderseite der Tragschicht (A) und einem Oberflächenpotential auf einer Rückseite der Tragschicht (A), erhalten durch Ablösen der gesamten Schutzschicht (B) von der elektrostatisch adsorbierbaren Folie, -0,07 bis -4,00 kV$^2$ beträgt, wobei das Oberflächenpotential gemessen wird, indem eine Zustandsanpassung mindestens 24 Stunden lang unter Bedingungen bei einer Temperatur von 23° C und einer relativen Luftfeuchtigkeit von 50 % an einer elektrostatisch adsorbierbaren Folie, die zu einer Größe von 15 cm x 15 cm zugeschnitten wurde, erfolgt, die Schutzschicht (B) von der Tragschicht (A) abgelöst wird, die Tragschicht (A) auf einer Metallplatte angeordnet wird, an der eine Masse angebracht ist, und ein Oberflächenpotentiometer so verwendet wird, dass der Abstand zwischen der Tragschicht (A) und dem Oberflächenpotentiometer 2 mm beträgt.

13. Anzeigeobjekt, erhalten durch Ablösen einer Schutzschicht (B) von der elektrostatisch adsorbierbaren Folie nach einem der Ansprüche 1 bis 12, Aufschichten einer Drucksache auf einer Fläche der Tragschicht (A) mittels elektrostatischer Adsorption, dann Ablösen der anderen Schutzschicht (B) der elektrostatisch adsorbierbaren Folie, und Anbringen der anderen Fläche der Tragschicht (A) an einer Haftfläche mittels elektrostatischer Adsorption.

**Revendications**

1. Feuille adsorbable électrostatique comprenant :

   une couche support (A) comprenant un film de résine thermoplastique ayant subi un traitement de charge ; et
   des couches protectrices (B) comprenant un film diélectrique,
   sachant que les couches protectrices (B) sont stratifiées sur les deux surfaces de la couche support (A) par adsorption électrostatique.

2. Feuille adsorbable électrostatique comprenant :

   une couche support (A) comprenant un film de résine thermoplastique ; et
   des couches protectrices (B) comprenant un film diélectrique ayant subi un traitement de charge,
   sachant que les couches protectrices (B) sont stratifiées sur les deux surfaces de la couche support (A) par adsorption électrostatique.

3. La feuille adsorbable électrostatique selon la revendication 1 ou 2, sachant qu'une résistivité de surface des deux surfaces de la couche support (A) est comprise entre 1 x 10$^{13}$ et 9 x 10$^{17}$ Ω, sachant que la résistivité de surface est mesurée conformément à JIS-K-6911.

4. La feuille adsorbable électrostatique selon l'une quelconque des revendications 1 à 3, sachant qu'une résistivité de surface d'une surface de la couche protectrice (B) en contact avec la couche support (A) est comprise entre 1 x 10$^{13}$ et 9 x 10$^{17}$ Ω, et une résistivité de surface d'une surface de la couche protectrice (B) qui n'est pas en contact avec la couche support (A) est comprise entre 1 x 10$^{-1}$ et 9 x 10$^{12}$ Ω, sachant que la résistivité de surface est mesurée conformément à JIS-K-6911 lorsque la résistivité de surface est de 1 x 10$^7$ Ω ou supérieure, et sachant que la résistivité de surface est mesurée conformément à JIS-K-7194 lorsque la résistivité de surface est inférieure à 1 x 10$^7$ Ω.

5. La feuille adsorbable électrostatique selon l'une quelconque des revendications 1 à 4, sachant qu'une transmittance de lumière totale de la couche support (A) mesurée conformément à JIS-K-7105 est comprise entre 60 et 100 %.

6. La feuille adsorbable électrostatique selon l'une quelconque des revendications 1 à 5, sachant que le traitement de charge comprend un traitement de décharge corona CC.

7. La feuille adsorbable électrostatique selon l'une quelconque de la revendication 1 ou des revendications 3 à 6, sachant que le traitement de charge est effectué sur les deux surfaces du film de résine thermoplastique.

8. La feuille adsorbable électrostatique selon l'une quelconque des revendications 1 à 7, sachant que la couche support (A) est un stratifié comprenant au moins deux films de résine thermoplastique.

9. La feuille adsorbable électrostatique selon la revendication 8, comprenant :
   deux stratifiés adsorbables électrostatiques, comprenant chacun un film de résine thermoplastique ayant subi un traitement de charge et une couche protectrice (B) stratifiée sur une surface du film de résine thermoplastique par adsorption électrostatique, sachant que les deux stratifiés adsorbables électrostatiques sont stratifiés l'un sur l'autre via un agent adhésif de sorte que les films de résine thermoplastique soient en contact l'un avec l'autre.

10. La feuille adsorbable électrostatique selon la revendication 8 ou 9, sachant qu'une résistivité de surface d'une surface du film de résine thermoplastique en contact avec la couche protectrice (B) est comprise entre $1 \times 10^{13}$ et $9 \times 10^{17}$ Ω, et une résistivité de surface d'une surface du film de résine thermoplastique qui n'est pas en contact avec la couche protectrice (B) est comprise entre $1 \times 10^{-1}$ et $9 \times 10^{12}$ Ω, sachant que la résistivité de surface est mesurée conformément à JIS-K-6911 lorsque la résistivité de surface est de $1 \times 10^{7}$ Ω ou supérieure, et sachant que la résistivité de surface est mesurée conformément à JIS-K-7194 lorsque la résistivité de surface est inférieure à $1 \times 10^{7}$ Ω.

11. La feuille adsorbable électrostatique selon l'une quelconque des revendications 1 à 10, sachant qu'un produit d'un potentiel de surface d'un côté avant de la couche support (A) et d'un potentiel de surface d'un côté arrière de la couche support (A) obtenu en décollant toute la couche protectrice (B) de la feuille adsorbable électrostatique est une valeur négative.

12. La feuille adsorbable électrostatique selon la revendication 11, sachant qu'un produit d'un potentiel de surface d'un côté avant de la couche support (A) et d'un potentiel de surface d'un côté arrière de la couche support (A) obtenu en décollant toute la couche protectrice (B) de la feuille adsorbable électrostatique est compris entre -0,07 et -4,00 kV$^2$, sachant que le potentiel de surface est mesuré en effectuant un ajustement d'état pendant au moins 24 heures dans des conditions de température de 23 °C et d'humidité relative de 50 % sur une feuille adsorbable électrostatique coupée à une taille de 15 cm x 15 cm, en décollant la couche protectrice (B) de la couche support (A), en plaçant la couche support (A) sur une plaque de métal sur laquelle une terre est montée, et en utilisant un potentiomètre de surface de manière que la distance entre la couche support (A) et le potentiomètre de surface soit de 2 mm.

13. Objet d'affichage obtenu en décollant une couche protectrice (B) de la feuille adsorbable électrostatique de l'une quelconque des revendications 1 à 12, en stratifiant une matière imprimée sur une surface de la couche support (A) par adsorption électrostatique, puis en décollant l'autre couche protectrice (B) de la feuille adsorbable électrostatique, et en attachant l'autre surface de la couche support (A) à une surface adhésive par adsorption électrostatique.

FIG. 1

FIG. 2

FIG. 3

FIG. 4

FIG. 5

FIG. 6

FIG. 7

FIG. 8

FIG. 9

FIG. 10

FIG. 11

FIG. 12

**FIG. 13**

FIG. 14

## FIG. 15

## FIG. 16

**FIG. 17**

**FIG. 18**

FIG. 19

FIG. 20

FIG. 21

**REFERENCES CITED IN THE DESCRIPTION**

**Patent documents cited in the description**

- JP 2012145936 A
- EP 2289695 A1
- JP 2000297260 A
- JP 2001220560 A